# EUROPEAN PATENT SPECIFICATION

(11) **EP 4 420 760 B1**
(45) Date of publication and mention of the grant of the patent: **31.12.2025**
(21) Application number: 22907097.4
(22) Date of filing: 10.11.2022
(51) Int. Cl.: B01D 53/22, B01D 63/02, F25D 11/00, F25D 23/00, A23B 7/148, F25D 17/04

(54) **AIR CONTROL APPARATUS, REFRIGERATOR, AND TRANSPORT CONTAINER**
LUFTSTEUERUNGSVORRICHTUNG, KÜHLSCHRANK UND TRANSPORTBEHÄLTER
APPAREIL DE COMMANDE D'AIR, RÉFRIGÉRATEUR ET CONTENEUR DE TRANSPORT

(30) Priority: 14.12.2021 JP 2021202395
(43) Date of publication of application: 28.08.2024
(73) Proprietor: Daikin Industries, Ltd., Osaka-shi, Osaka 530-0001 (JP)
(72) Inventor: SHIBUYA, Kento, Osaka-shi, Osaka 530-0001 (JP); HIRATA, Wataru, Osaka-shi, Osaka 530-0001 (JP)
(74) Representative: Hoffmann Eitle
(86) International application number: PCT/JP2022/041900
(87) International publication number: WO 2023/112566

(56) References cited:
- JP-A- 2002 191 927
- JP-A- 2002 191 927
- JP-A- 2005 205 275
- JP-A- 2019 066 169
- JP-A- 2019 066 169
- JP-A- H03 127 609
- JP-A- H1 085 545
- KR-B1- 101 560 805
- US-A1- 2014 141 139
- US-A1- 2021 283 550

## Description

### TECHNICAL FIELD

The present disclosure relates to an air control apparatus, a refrigeration apparatus, and a transport container.

### BACKGROUND ART

Japanese Unexamined Patent Publication No. 2019-66169 discloses an air control apparatus that adjusts the composition of inside air in an internal space. The air control apparatus includes gas separation membranes. Some of the components in target air flowing through the gas separation membranes (such as oxygen and carbon dioxide) permeate through the gas separation membranes. The air whose composition has been adjusted in this manner is supplied into the internal space.

JP 2019 066169 A relates to an in-compartment air conditioning apparatus for adjusting the composition of in-compartment air of a storage.

JP 2002 191927 A relates to a gas separation membrane device and a method for stopping the operation of the gas separation membrane device.

### SUMMARY OF THE INVENTION

### TECHNICAL PROBLEM

If such an air control apparatus as described in Japanese Unexamined Patent Publication No. 2019-66169 has been stopped for a long period, separation membranes contract, and thus have smaller pores. As a result, the performance of the separation membranes deteriorates.

It is an object of the present disclosure to reduce deterioration in the performance of a separation membrane caused by stopping of an air control apparatus.

### SOLUTION TO THE PROBLEM

The invention is defined by claim 1.

Preferred embodiments are defined in the dependent claims.

### BRIEF DESCRIPTION OF THE DRAWINGS

FIG. 1 is a perspective view illustrating a transport container according to an embodiment as viewed from the front.
FIG. 2 is a longitudinal sectional view schematically illustrating an internal structure of the transport container of the embodiment.
FIG. 3 is a piping system diagram of a refrigerant circuit of a transport refrigeration apparatus of the embodiment.
FIG. 4 is a block diagram showing a schematic configuration of the transport container of the embodiment.
FIG. 5 is a piping system diagram showing a configuration of an air control apparatus of the embodiment.
FIG. 6 is a schematic sectional view of a gas separation module provided in the air control apparatus of the embodiment.
FIG. 7 is a schematic sectional view of a water separation module provided in the air control apparatus of the embodiment.
FIG. 8 is a diagram corresponding to FIG. 5 and showing a first operation of the air control apparatus of the embodiment.
FIG. 9 is a diagram corresponding to FIG. 5 and showing a second operation of the air control apparatus of the embodiment.
FIG. 10 is a diagram corresponding to FIG. 5 and showing a third operation of the air control apparatus of the embodiment.
FIG. 11 is a diagram corresponding to FIG. 5 and showing a fourth operation of the air control apparatus of the embodiment.
FIG. 12 is a diagram corresponding to FIG. 5 and showing a fifth operation of the air control apparatus of the embodiment.
FIG. 13 is a flowchart of control related to a determination of start of a preliminary operation of the air control apparatus according to the embodiment.
FIG. 14 is a flowchart of control related to a preliminary operation of an air control apparatus of a first variation.
FIG. 15 is a diagram corresponding to FIG. 5 and showing an air control apparatus of a second variation.
FIG. 16 is a diagram corresponding to FIG. 5 and showing a preliminary operation of the air control apparatus of the second variation.
FIG. 17 is a diagram corresponding to FIG. 5 and showing an air control apparatus of a third variation.
FIG. 18 is a flowchart of control related to a first action of an air control apparatus of a fourth variation.
FIG. 19 is a flowchart of control related to a second action of an air control apparatus of a fifth variation.
FIG. 20 is a diagram corresponding to FIG. 5 and showing an air control apparatus of a sixth variation.

### DESCRIPTION OF EMBODIMENTS

Embodiments of the present disclosure will be described in detail below with reference to the drawings. The present disclosure is not limited to the embodiments shown below. Since each of the drawings is intended to illustrate the present disclosure conceptually, dimensions, ratios, or numbers may be exaggerated or simplified as necessary for the sake of ease of understanding.

### (1) Outline of Transport Container

The present disclosure relates to a transport container (1). The transport container (1) is a reefer container capable of controlling the temperature in the container. The transport container (1) is used to transport fresh products such as fruits, vegetables, flowers and ornamental plants. The fresh products absorb oxygen (O₂) in the air and release carbon dioxide (CO₂).

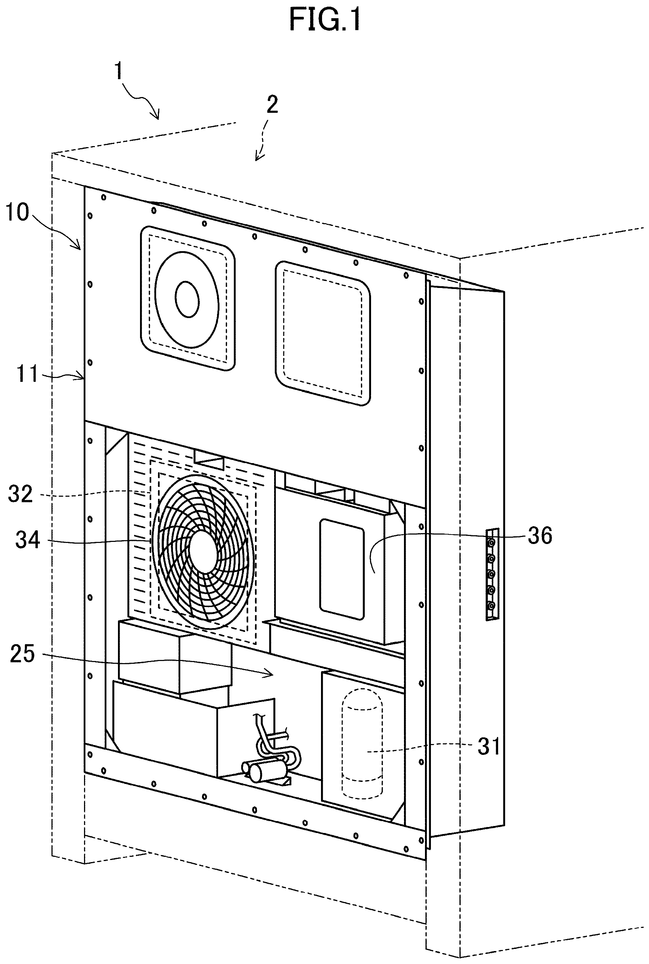

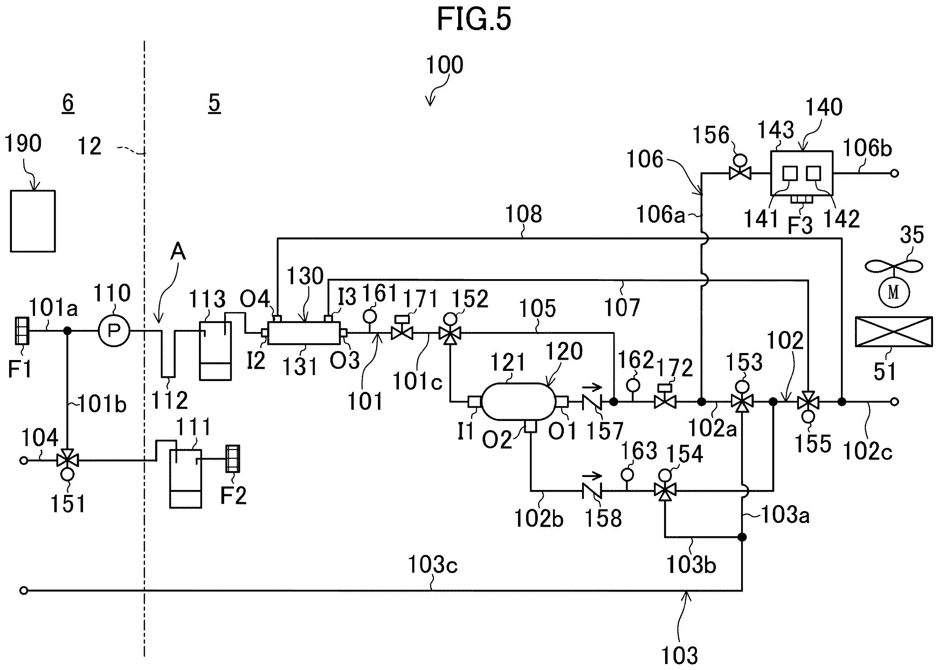

As illustrated in FIG. 1, the transport container (1) includes a container body (2) and a transport refrigeration apparatus (10) provided in the container body (2). The transport container (1) is used for marine transportation. The transport container (1) is conveyed by a marine transporter, such as a ship. As illustrated in FIG. 5, the transport container (1) includes an air control apparatus (100). The air control apparatus (100) adjusts the composition of air in the container body (2).

### (2) Container Body

The container body (2) is a storage for storing the fresh products.

The container body (2) has a hollow box shape. The container body (2) is formed to be horizontally long. The container body (2) has an opening formed at one end in the longitudinal direction. The transport refrigeration apparatus (10) blocks the opening of the container body (2). The container body (2) has an internal space (5) therein, which is an internal space of the container for storing objects to be transported.

### (3) Transport Refrigeration Apparatus

The transport refrigeration apparatus (10) is attached to the opening of the container body (2). The transport refrigeration apparatus (10) includes a casing (11) and a refrigerant circuit (30). The transport refrigeration apparatus (10) adjusts the temperature of air in the internal space (5) (the inside air).

### (3-1) Casing

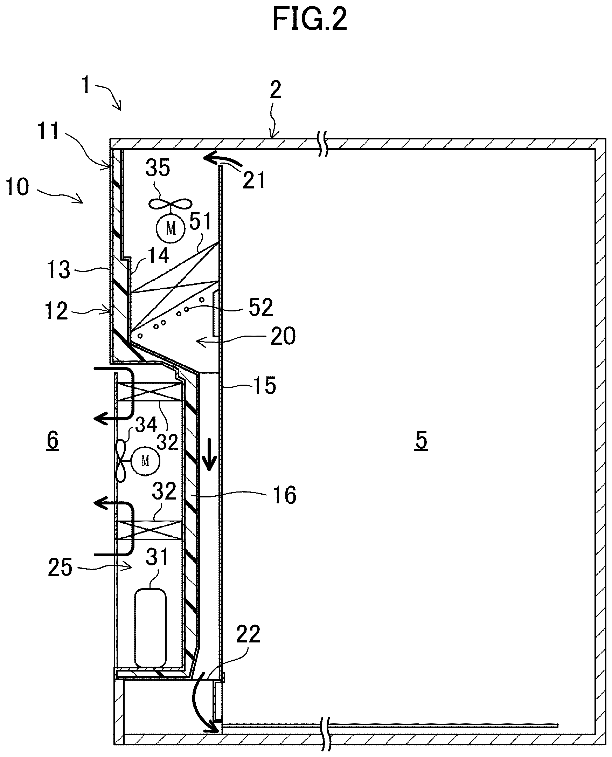

As shown in FIG. 2, the casing (11) includes a division wall (12) and a partition plate (15).

An internal flow path (20) is formed inside the division wall (12). An external chamber (25) which is part of an external space (6) is formed outside the division wall (12). The division wall (12) separates the internal flow path (20) and the external chamber (25) from each other.

The division wall (12) includes an external wall (13) and an internal wall (14). The external wall (13) is located outside the container body (2). The internal wall (14) is located inside the container body (2).

The external wall (13) closes the opening of the container body (2). The external wall (13) is attached to a peripheral portion of the opening of the container body (2). A lower portion of the external wall (13) bulges toward the inside of the container body (2). The external chamber (25) is formed inside the bulging external wall (13).

The internal wall (14) faces the external wall (13). The internal wall (14) is shaped along the external wall (13). A thermal insulator (16) is provided between the internal wall (14) and the external wall (13).

The partition plate (15) is arranged further inward of the container body (2) than the internal wall (14). The internal flow path (20) is formed between the division wall (12) and the partition plate (15). An inflow port (21) is formed between an upper end of the partition plate (15) and a top panel of the container body (2). An outflow port (22) is formed between a lower end of the partition plate (15) and a lower end of the division wall (12). The internal flow path (20) extends from the inflow port (21) to the outflow port (22).

### (3-2) Components of Refrigerant Circuit

The refrigerant circuit (30) is filled with a refrigerant. The refrigerant circulates in the refrigerant circuit (30) to perform a vapor compression refrigeration cycle. The refrigerant circuit (30) includes a compressor (31), an external heat exchanger (32), an expansion valve (33), an internal heat exchanger (51), and a refrigerant pipe connecting these components.

The compressor (31) is arranged in a lower portion of the external chamber (25). The external heat exchanger (32) is arranged in an upper portion of the external chamber (25). The external heat exchanger (32) is a fin-and-tube heat exchanger that exchanges heat between a refrigerant and outside air. The external heat exchanger (32) has a generally rectangular tubular shape. The internal heat exchanger (51) is arranged in the internal flow path (20). The internal heat exchanger (51) is a fin-and-tube heat exchanger that exchanges heat between a refrigerant and inside air.

### (3-3) External Fan and Internal Fan

The transport refrigeration apparatus (10) includes a single external fan (34). The external fan (34) is a propeller fan. The external fan (34) is arranged in the external chamber (25). The external fan (34) is arranged inside the external heat exchanger (32) having a tubular shape. The external fan (34) sends the outside air to the external heat exchanger (32).

The transport refrigeration apparatus (10) includes two internal fans (35). The internal fans (35) are propeller fans. The internal fans (35) are arranged in the internal flow path (20). The internal fans (35) are arranged above the internal heat exchanger (51). The internal fans (35) send inside air to the internal heat exchanger (51).

### (3-4) Heater

The transport refrigeration apparatus (10) includes a heater (52). The heater (52) is arranged below the internal heat exchanger (51). The heater (52) is used to defrost the internal heat exchanger (51).

### (3-5) Electric Component Box

As illustrated in FIG. 1, the transport refrigeration apparatus (10) includes an electric component box (36). The electric component box (36) is arranged in an upper portion of the external chamber (25). The electric component box (36) houses electric components such as an inverter board and a control board.

### (3-6) Configuration of Refrigerant Circuit

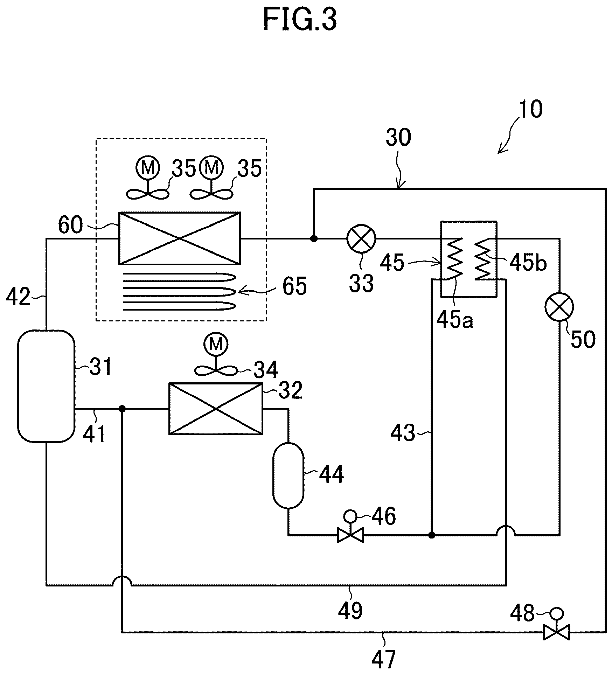

As shown in FIG. 3, the refrigerant circuit (30) has, as main components, the compressor (31), the external heat exchanger (32), the expansion valve (33), and the internal heat exchanger (51). The expansion valve (33) is an electronic expansion valve having a variable opening degree.

The refrigerant circuit (30) has a discharge pipe (41) and a suction pipe (42). One end of the discharge pipe (41) is connected to a discharge portion of the compressor (31). The other end of the discharge pipe (41) is connected to a gas end of the external heat exchanger (32). One end of the suction pipe (42) is connected to a suction portion of the compressor (31). The other end of the suction pipe (42) is connected to a gas end of the internal heat exchanger (51).

The refrigerant circuit (30) has a liquid pipe (43), a receiver (44), a cooling heat exchanger (45), a first on-off valve (46), a connecting pipe (47), a second on-off valve (48), an injection pipe (49), and an injection valve (50).

One end of the liquid pipe (43) is connected to a liquid end of the external heat exchanger (32). The other end of the liquid pipe (43) is connected to a liquid end of the internal heat exchanger (51). The receiver (44) is provided for the liquid pipe (43). The receiver (44) is a container that stores the refrigerant.

The cooling heat exchanger (45) has a first flow path (45a) and a second flow path (45b). The cooling heat exchanger (45) exchanges heat between the refrigerant in the first flow path (45a) and the refrigerant in the second flow path (45b). The cooling heat exchanger (45) is, for example, a plate heat exchanger. The first flow path (45a) is a portion of the liquid pipe (43). The second flow path (45b) is a portion of the injection pipe (49). The cooling heat exchanger (45) cools the refrigerant flowing through the liquid pipe (43).

The first on-off valve (46) is arranged in the liquid pipe (43) between the receiver (44) and the first flow path (45a). The first on-off valve (46) is an electromagnetic valve that can be opened and closed.

The connecting pipe (47) allows a high-pressure line and a low-pressure line of the refrigerant circuit (30) to communicate with each other. One end of the connecting pipe (47) is connected to the discharge pipe (41). The other end of the connecting pipe (47) is connected to the liquid pipe (43) between the expansion valve (33) and the internal heat exchanger (51).

The second on-off valve (48) is provided for the connecting pipe (47). The second on-off valve (48) is an electromagnetic valve that can be opened and closed.

The injection pipe (49) introduces the refrigerant into an intermediate-pressure portion of the compressor (31). One end of the injection pipe (49) is connected to the liquid pipe (43) between the receiver (44) and the first flow path (45a). The other end of the injection pipe (49) is connected to the intermediate-pressure portion of the compressor (31). An intermediate pressure, which is the pressure of the intermediate-pressure portion, is a pressure higher than the suction pressure and lower than the discharge pressure of the compressor (31).

The injection valve (50) is arranged upstream of the second flow path (45b) in the injection pipe (49). The injection valve (50) is an electronic expansion valve having a variable opening degree.

### (3-7) First Control Unit

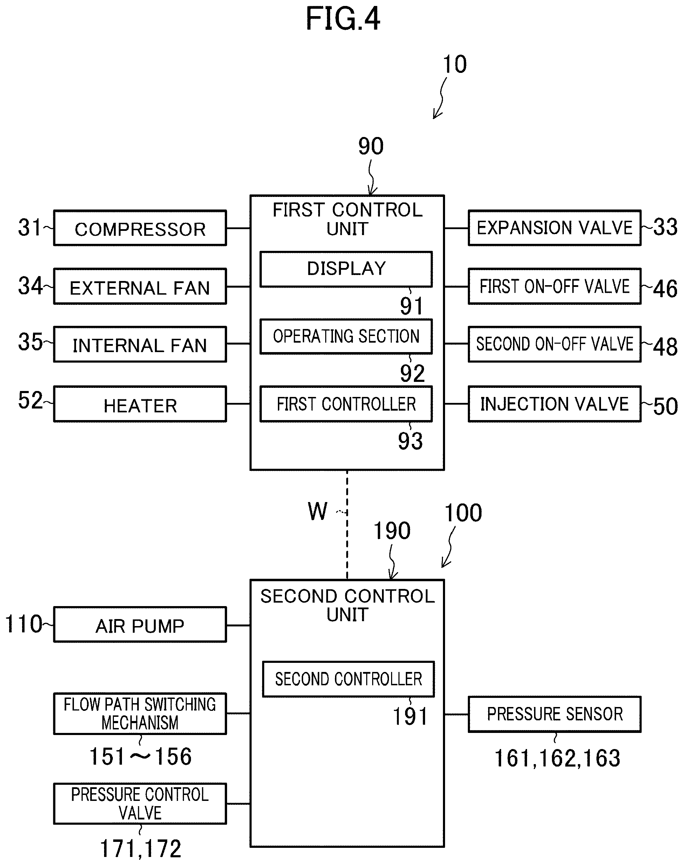

As shown in FIG. 4, the transport refrigeration apparatus (10) includes a first control unit (90). The first control unit (90) includes a display (91), an operating section (92), and a first controller (93).

The display (91) is configured as a liquid crystal panel, for example. The display (91) displays information on operations of the transport refrigeration apparatus (10) and the air control apparatus (100).

The operating section (92) includes an operation button. The operating section (92) may be a touch panel which is also used as a liquid crystal panel serving as the display (91). A person uses the operating section (92) to handle the operation of the transport refrigeration apparatus (10). The person uses the operating section (92) to set the operating conditions of the transport refrigeration apparatus (10).

The first controller (93) includes a micro controller unit (MCU), an electric circuit, and an electronic circuit. The MCU includes a central processing unit (CPU), a memory, and a communication interface. The memory stores various programs to be executed by the CPU.

The first controller (93) controls the external fan (34), the internal fans (35), the heater (52), and the refrigerant circuit (30). Specifically, the first controller (93) controls the external fan (34), the internal fans (35), the heater (52), and the compressor (31). The first controller (93) controls the number of revolutions of the external fan (34), the number of revolutions of the internal fans (35), and the number of revolutions (operation frequency) of the compressor (31). The first controller (93) controls the opening degrees of the expansion valve (33), the first on-off valve (46), the second on-off valve (48), and the injection valve (50).

### (3-8) Operation of Transport Refrigeration Apparatus

A basic operation of the transport refrigeration apparatus (10) will be described below. When the transport refrigeration apparatus (10) is in operation, the first controller (93) causes the compressor (31), the external fan (34), and the internal fans (35) to operate. The first controller (93) opens the first on-off valve (46) and closes the second on-off valve (48). The first controller (93) adjusts the opening degree of the expansion valve (33). The first controller (93) adjusts the opening degree of the injection valve (50).

The refrigerant compressed by the compressor (31) flows through the external heat exchanger (32). In the external heat exchanger (32), the refrigerant dissipates heat to the outside air to condense. The condensed refrigerant passes through the receiver (44). Part of the refrigerant that has passed through the receiver (44) flows through the first flow path (45a) of the cooling heat exchanger (45). The remaining of the refrigerant that has passed through the receiver (44) flows through the injection pipe (49), and is decompressed to the intermediate pressure by the injection valve (50). The decompressed refrigerant is introduced into the intermediate-pressure portion of the compressor (31).

In the cooling heat exchanger (45), the refrigerant in the second flow path (45b) absorbs heat from the refrigerant in the first flow path (45a) to evaporate. This cools the refrigerant in the first flow path (45a). In other words, the degree of subcooling of the refrigerant flowing through the first flow path (45a) increases.

The refrigerant cooled in the cooling heat exchanger (45) is decompressed to a low pressure by the expansion valve (33). The decompressed refrigerant flows through the internal heat exchanger (51). In the internal heat exchanger (51), the refrigerant absorbs heat from the inside air to evaporate. As a result, the internal heat exchanger (51) cools the inside air. The evaporated refrigerant is sucked into the compressor (31) and compressed again.

The air in the container body (2) circulates between the internal space (5) and the internal flow path (20). In the internal flow path (20), the internal heat exchanger (51) cools the inside air. Thus, the inside air of the internal space (5) can be cooled and adjusted to a predetermined temperature.

### (4) Air Control Apparatus

The transport refrigeration apparatus (10) of this embodiment includes the air control apparatus (100).

The air control apparatus (100) is provided in the transport refrigeration apparatus (10) to provide so-called controlled atmosphere (CA) transportation. The air control apparatus (100) adjusts the composition of air in the internal space (5) of the transport container (1) so that the composition of the air is different from that of the atmospheric air.

As shown in FIG. 5, the air control apparatus (100) includes an air flow path (A) into which target air is introduced. The target air includes outside air and inside air. The air flow path (A) may be rigid pipes, may be flexible hoses, or may be a combination of a pipe and a hose.

The air flow path (A) is provided with an air pump (110), a gas separation module (120), and a sensor unit (140). The air pump (110) transfers the air in the air flow path (A). The gas separation module (120) adjusts the composition of the air. The gas separation module (120) separates the target air into the first air and the second air. The sensor unit (140) measures the composition of the air.

### (4-1) Air Flow Path

The air flow path (A) includes an inflow path (101), an air supply flow path (102), an exhaust flow path (103), an internal exhaust path (104), a bypass flow path (105), and a sensor flow path (106).

The inflow path (101) is a flow path for transferring the target air to the gas separation module (120). The inflow path (101) includes a first inflow path (101a), a second inflow path (101b), and an inflow trunk path (101c).

The first inflow path (101a) is a flow path for introducing the outside air into the air flow path (A). The first inflow path (101a) has an inlet end that is open to the external space (6). The first inflow path (101a) is provided with a first air filter (F1). The first air filter (F1) captures dust, salt, and other substances contained in the outside air. The first air filter (F1) is configured as a membrane filter, for example.

The second inflow path (101b) is a flow path for introducing the inside air into the air flow path (A). The second inflow path (101b) has an inlet end that is open to the internal space (5). The second inflow path (101b) is provided with a second air filter (F2). The second air filter (F2) captures dust and other substances contained in the inside air. The second air filter (F2) is configured as a membrane filter, for example. The second inflow path (101b) is provided with a first water separator (111).

The inflow trunk path (101c) has an inlet end to which an outlet end of the first inflow path (101a) and an outlet end of the second inflow path (101b) are connected. The inflow trunk path (101c) has an outlet end to which a first inlet port (I1) of the gas separation module (120) is connected. The inflow trunk path (101c) is provided with the air pump (110), a condensation circuit (112), a second water separator (113), and a water separation module (130) from the upstream side toward the downstream side of the air flow.

The air supply flow path (102) is a flow path for transferring the air separated by the gas separation module (120) into the internal space (5). The air supply flow path (102) includes a first air supply path (102a), a second air supply path (102b), and an air supply trunk path (102c).

The first air supply path (102a) is a flow path for transferring the first air separated by the gas separation module (120) into the internal space (5). The first air supply path (102a) has an inlet end to which a first outlet port (O1) of the gas separation module (120) is connected.

The second air supply path (102b) is a flow path for transferring the second air separated by the gas separation module (120) into the internal space (5). The second air supply path (102b) has an inlet end to which a second outlet port (O2) of the gas separation module (120) is connected.

The air supply trunk path (102c) has an inlet end to which an outlet end of the first air supply path (102a) and an outlet end of the second air supply path (102b) are connected. The air supply trunk path (102c) has an outlet end that is open to the internal space (5). Strictly speaking, the outlet end of the air supply trunk path (102c) is open to a portion of the internal flow path (20) of the transport refrigeration apparatus (10) downstream of the internal fans (35).

The exhaust flow path (103) is a flow path for discharging the air separated by the gas separation module (120) to the external space (6). This air includes either one or both of the first air and the second air. The exhaust flow path (103) includes a first exhaust path (103a), a second exhaust path (103b), and an exhaust trunk path (103c).

The first exhaust path (103a) is a flow path for discharging the first air to the external space (6). The first exhaust path (103a) has an inlet end connected to the first air supply path (102a). The second exhaust path (103b) is a flow path for discharging the second air to the external space (6). The second exhaust path (103b) has an inlet end connected to the second air supply path (102b). The exhaust trunk path (103c) has an inlet end to which an outlet end of the first exhaust path (103a) and an outlet end of the second exhaust path (103b) are connected. The exhaust trunk path (103c) has an outlet end that is open to the external space (6).

The internal exhaust path (104) is a flow path for discharging air in the internal space (5) to the external space (6). The internal exhaust path (104) has an inlet end connected to an intermediate portion of the second inflow path (101b). Strictly speaking, the inlet end of the internal exhaust path (104) is connected to a first switching valve (151). The internal exhaust path (104) has an outlet end that is open to the external space (6).

The bypass flow path (105) is connected to the inflow trunk path (101c) so that the air bypasses the gas separation module (120). The bypass flow path (105) has an inlet end connected to the inflow trunk path (101c). Strictly speaking, the inlet end of the bypass flow path (105) is connected to a second switching valve (152). The bypass flow path (105) has an outlet end connected to the first air supply path (102a).

The sensor flow path (106) is a flow path for transferring the air to the sensor unit (140). The sensor flow path (106) includes a first sensor path (106a) and a second sensor path (106b). The first sensor path (106a) has an inlet end connected to the first air supply path (102a). The first sensor path (106a) has an outlet end connected to the sensor unit (140). The second sensor path (106b) has an inlet end connected to the sensor unit (140). The second sensor path (106b) has an outlet end that is open to the internal space (5). Strictly speaking, the outlet end of the second sensor path (106b) is open to a portion of the internal flow path (20) of the transport refrigeration apparatus (10) upstream of the internal fans (35).

### (4-2) Air Pump

The air pump (110) is an example of an air transfer device. The air pump (110) has a suction port and a discharge port. The air pump (110) compresses the air sucked in from the suction port, and discharges the compressed air from the discharge port. The air pump (110) is an example of a compression unit that compresses the air to be supplied to gas separation membranes (124).

### (4-3-1) Configuration of Gas Separation Module

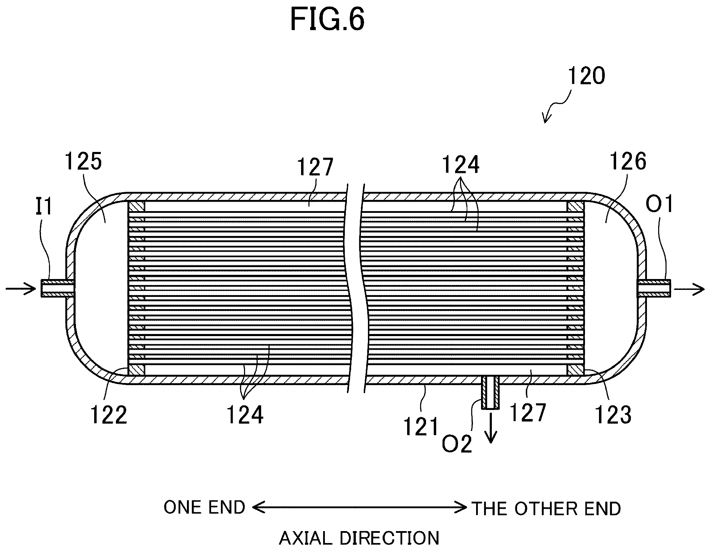

The gas separation module (120) separates the target air into the first air and the second air having different compositions. As illustrated in FIG. 6, the gas separation module (120) includes a first case (121), a first division wall (122), a second division wall (123), and a plurality of gas separation membranes (124). The first division wall (122) and the second division wall (123) are arranged inside the first case (121). The plurality of gas separation membranes (124) are arranged between the first division wall (122) and the second division wall (123).

The first case (121) is a cylindrical container with both ends closed. The first case (121) extends in its axial direction. The first case (121) has one end in the axial direction to which the first inlet port (I1) is connected. The first case (121) has the other end in the axial direction to which the first outlet port (O1) is connected. The first case (121) has a peripheral wall portion to which the second outlet port (O2) is connected.

The first division wall (122) is located near the one end of the first case (121). The second division wall (123) is located near the other end of the first case (121). The first division wall (122) and the second division wall (123) are partitioning members for partitioning the internal space of the first case (121) in the axial direction. The first division wall (122) and the second division wall (123) are provided to cross the first case (121).

The first case (121) has therein a first introduction chamber (125), a first exhaust chamber (126), and a second exhaust chamber (127). The first introduction chamber (125) is formed between the one end of the first case (121) and the first division wall (122). The first exhaust chamber (126) is formed between the other end of the first case (121) and the second division wall (123). The second exhaust chamber (127) is formed in a space defined by the peripheral wall portion of the first case (121), the first division wall (122), and the second division wall (123) and is located outside the plurality of gas separation membranes (124).

The gas separation membranes (124) are configured as hollow fiber membranes made of resin. In other words, the gas separation membranes (124) are formed in the shape of hollow fibers or elongated tubes. Each of the gas separation membranes (124) has an outside diameter of 1 mm or less. The gas separation membranes (124) have substantially the same thickness.

The gas separation membranes (124) extend between the first division wall (122) and the second division wall (123) in the axial direction of the first case (121). One end (inlet end) of each gas separation membrane (124) passes through the first division wall (122) to open to the first introduction chamber (125). The other end (outlet end) of the gas separation membrane (124) passes through the second division wall (123) to open to the first exhaust chamber (126). The first introduction chamber (125) and the first exhaust chamber (126) communicate with each other through the gas separation membranes (124). The second exhaust chamber (127) does not substantially communicate with the first introduction chamber (125), the first exhaust chamber (126), and the interiors of the gas separation membranes (124).

The gas separation membranes (124) are polymeric non-porous membranes. Using the fact that the rate at which molecules permeate through the gas separation membranes (124) varies among substances, the gas separation membranes (124) separate components contained in mixed gas from one another.

The permeation rate of nitrogen through the gas separation membranes (124) is lower than the permeation rates of both oxygen and carbon dioxide. In other words, the permeability of nitrogen through the gas separation membranes (124) is lower than the permeabilities of both oxygen and carbon dioxide.

### (4-3-2) Action of Gas Separation Module

The target air in the inflow path (101) flows through the first inlet port (I1) into the first introduction chamber (125). The air in the first introduction chamber (125) flows through the interiors of the gas separation membranes (124) toward the first exhaust chamber (126). Part of the air inside the gas separation membranes (124) permeates through the gas separation membranes (124) to move to the second exhaust chamber (127), and the remaining part flows out into the first exhaust chamber (126).

The permeability of nitrogen through the gas separation membranes (124) is lower than the permeabilities of oxygen and carbon dioxide. In other words, nitrogen in the air is less likely to permeate through the gas separation membranes (124) than oxygen and carbon dioxide. Thus, as the air flowing through the interiors of the gas separation membranes (124) approaches the first exhaust chamber (126), the nitrogen concentration of the air increases, and the oxygen concentration and carbon dioxide concentration decrease. Oxygen and carbon dioxide contained in the air flowing through the gas separation membranes (124) permeate through the gas separation membranes (124) to move to the second exhaust chamber (127).

The nitrogen concentration in the air that has flowed out into the first exhaust chamber (126) is higher than the nitrogen concentration in the air in the first introduction chamber (125). The oxygen concentration and carbon dioxide concentration in the air that has flowed out into the first exhaust chamber (126) are lower than the oxygen concentration and carbon dioxide concentration in the air in the first introduction chamber (125). The air in the first exhaust chamber (126) is the first air. The first air flows out through the first outlet port (O1) into the first air supply path (102a).

The nitrogen concentration in the air that has flowed out into the second exhaust chamber (127) is lower than the nitrogen concentration in the air in the first introduction chamber (125). The oxygen concentration and carbon dioxide concentration in the air that has flowed out into the second exhaust chamber (127) are higher than the oxygen concentration and carbon dioxide concentration in the air in the first introduction chamber (125). The air in the second exhaust chamber (127) is the second air. The second air flows out through the second outlet port (O2) into the second air supply path (102b).

### (4-4) First Water Separator, Condensation Circuit, and Second Water Separator

The first water separator (111) is provided downstream of the second air filter (F2) in the second inflow path (101b). The first water separator (111) removes water in a liquid state contained in the air. Strictly speaking, the first water separator (111) is a cyclone gas-liquid separator that removes the water in the liquid state contained in the air by centrifugal force. The first water separator (111) is an example of a dehumidifier that reduces moisture in the air to be supplied to the gas separation membranes (124).

The condensation circuit (112) is arranged between the air pump (110) and the second water separator (113) in the inflow trunk path (101c). The condensation circuit (112) is configured as a heat transfer tube located in the internal space (5). The air flowing through the condensation circuit (112) is cooled by the inside air. As a result, moisture in the air in the condensation circuit (112) condenses to form condensed water.

The second water separator (113) is arranged between the condensation circuit (112) and the water separation module (130) in the inflow trunk path (101c). The second water separator (113) removes moisture contained in the air. Strictly speaking, the second water separator (113) is a cyclone gas-liquid separator that removes water in the liquid state contained in the air by centrifugal force. The second water separator (113) is an example of a dehumidifier that reduces moisture in the air to be supplied to the gas separation membranes (124).

### (4-5-1) Configuration of Water Separation Module

The water separation module (130) is arranged upstream of the gas separation membranes (124) in the inflow trunk path (101c). The water separation module (130) removes moisture contained in the air. Strictly speaking, the water separation module (130) separates water molecules contained in the air. The water separation module (130) of this example is a membrane type dryer, which is the SUNSEP (the registered trademark).

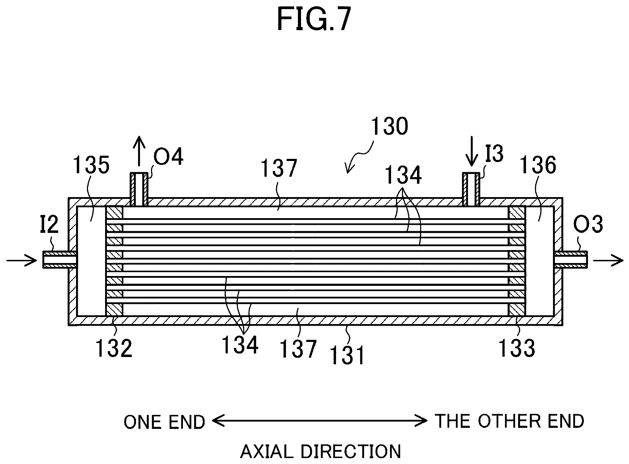

As illustrated in FIG. 7, the water separation module (130) includes a second case (131), a third division wall (132), a fourth division wall (133), and a plurality of water separation membranes (134). The third division wall (132) and the fourth division wall (133) are arranged inside the second case (131). The plurality of water separation membranes (134) are arranged between the third division wall (132) and the fourth division wall (133).

The second case (131) is a cylindrical container with both ends closed. The second case (131) extends in its axial direction. The second case (131) has one end in the axial direction to which a second inlet port (I2) is connected. The second case (131) has the other end in the axial direction to which a third outlet port (O3) is connected. The second case (131) has a peripheral wall portion to which a third inlet port (I3) and a fourth outlet port (O4) are connected. The third inlet port (I3) is located in a portion of the peripheral wall portion of the second case (131) near the other end of the second case (131). The fourth outlet port (O4) is located in a portion of the peripheral wall portion of the second case (131) near the one end of the second case (131).

As illustrated in FIG. 5, the second inlet port (I2) is connected to a portion of the inflow trunk path (101c) upstream of the water separation module (130). The third outlet port (O3) is connected to a portion of the inflow trunk path (101c) upstream of the gas separation module (120).

The air flow path (A) includes an introduction path (107) and a water supply path (108). The introduction path (107) and the water supply path (108) are connected to the water separation module (130).

The introduction path (107) is a flow path for supplying air with relatively low humidity to the water separation module (130). The introduction path (107) has an inlet end connected to the air supply trunk path (102c). The introduction path (107) has an outlet end connected to the third inlet port (I3) of the water separation module (130).

The water supply path (108) is a flow path for transferring air containing water separated by the water separation module (130) into the internal space (5). The water supply path (108) has an inlet end connected to the fourth outlet port (O4) of the water separation module (130). The water supply path (108) has an outlet end connected to a portion of the air supply trunk path (102c) downstream of the inlet end of the introduction path (107). Strictly speaking, the outlet end of the water supply path (108) is connected downstream of a fifth switching valve (155).

The second case (131) has therein a second introduction chamber (135), a third exhaust chamber (136), and a fourth exhaust chamber (137). The second introduction chamber (135) is formed between the one end of the second case (131) and the third division wall (132). The third exhaust chamber (136) is formed between the other end of the second case (131) and the fourth division wall (133). The fourth exhaust chamber (137) is formed in a space defined by the peripheral wall portion of the second case (131), the third division wall (132), and the fourth division wall (133) and is located outside the plurality of water separation membranes (134).

The water separation membranes (134) extend between the third division wall (132) to the fourth division wall (133) in the axial direction of the second case (131). One end (inlet end) of each water separation membrane (134) passes through the third division wall (132) to open to the second introduction chamber (135). The other end (outlet end) of the water separation membrane (134) passes through the fourth division wall (133) to open to the third exhaust chamber (136). The second introduction chamber (135) and the third exhaust chamber

(136) communicate with each other through the water separation membranes (134). The fourth exhaust chamber (137) does not substantially communicate with the second introduction chamber (135), the third exhaust chamber (136), and the interiors of the water separation membranes (134).

The water separation membranes (134) are configured as hollow fiber membranes made of resin. In other words, the water separation membranes (134) are formed in the shape of hollow fibers or elongated tubes. The water separation membranes (134) are made of fluorine ion-exchange resin. The water separation membranes (134) have the property of allowing water molecules in the air to permeate therethrough.

The water separation module (130) including the water separation membranes (134) is an example of a dehumidifier that reduces moisture in the air to be supplied to the gas separation membranes (124).

### (4-5-2) Action of Water Separation Module

The target air in the inflow path (101) flows through the second inlet port (I2) into the second introduction chamber (135). The air in the second introduction chamber (135) flows through the interiors of the water separation membranes (134) toward the third exhaust chamber (136). The air in the air supply trunk path (102c) flows through the third inlet port (I3) into the fourth exhaust chamber (137).

Water molecules in the air inside the water separation membranes (134) permeate through the water separation membranes (134) to move to the fourth exhaust chamber (137). Thus, the water molecules that have permeated through the water separation membranes (134) are imparted to the air flowing through the fourth exhaust chamber (137). The air inside the water separation membranes (134) is dehumidified by losing the water molecules, and flows out into the third exhaust chamber (136). The air in the third exhaust chamber (136) flows out into the inflow trunk path (101c) through the third outlet port (O3), and is supplied to the gas separation module (120).

The air humidified in the fourth exhaust chamber (137) flows out into the water supply path (108) through the fourth outlet port (O4). The air in the water supply path (108) flows out into the air supply trunk path (102c), and is sent into the internal space (5).

### (4-6) Sensor Unit

The sensor unit (140) includes an oxygen sensor (141), a carbon dioxide sensor (142), and a sensor case (143).

The oxygen sensor (141) is a sensor of zirconia current type that measures the oxygen concentration of mixed gas such as air. The carbon dioxide sensor (142) is a non-dispersive infrared (NDIR) sensor that measures the carbon dioxide concentration of the mixed gas such as air. The oxygen sensor (141) and the carbon dioxide sensor (142) are housed in the sensor case (143).

The sensor case (143) is a box-shaped member. The sensor case (143) has a third air filter (F3). The third air filter (F3) is a membrane filter for capturing dust and other substances contained in the inside air. The third air filter (F3) filters the inside air flowing into the sensor case (143).

### (4-7) Flow Path Switching Mechanism

The air flow path (A) is provided with a flow path switching mechanism for changing the air flow. The flow path switching mechanism includes the first switching valve (151), the second switching valve (152), a third switching valve (153), a fourth switching valve (154), and the fifth switching valve (155). These switching valves (151, 152, 153, 154, 155) are configured as three-way valves.

The first switching valve (151) is provided at the joint between the second inflow path (101b) and the internal exhaust path (104). The first switching valve (151) switches between a first state in which the inside air is supplied to the gas separation module (120) and a second state in which the inside air is discharged to the external space (6). Specifically, the first switching valve (151) in the first state allows the internal space (5) and the inflow trunk path (101c) to communicate with each other, and isolates the internal space (5) and the external space (6) from each other. The first switching valve (151) in the second state isolates the internal space (5) and the inflow trunk path (101c) from each other, and allows the internal space (5) and the external space (6) to communicate with each other.

The second switching valve (152) is provided at the joint between the inflow trunk path (101c) and the bypass flow path (105). In other words, the second switching valve (152) is provided upstream of the gas separation membranes (124) in the inflow trunk path (101c). The second switching valve (152) switches between a first state in which the air in the inflow path (101) is supplied to the gas separation module (120) and a second state in which the air in the inflow path (101) bypasses the gas separation module (120). Specifically, the second switching valve (152) in the first state allows the inflow trunk path (101c) to communicate with the gas separation membranes (124), and isolates the inflow trunk path (101c) and the bypass flow path (105) from each other. The second switching valve (152) in the second state isolates the inflow trunk path (101c) from the gas separation membranes (124), and allows the inflow trunk path (101c) and the bypass flow path (105) to communicate with each other.

The third switching valve (153) is provided at the joint between the first air supply path (102a) and the first exhaust path (103a). In other words, the third switching valve (153) is provided in the first air supply path (102a), between the joint with the sensor flow path (106) and the outlet end of the first air supply path (102a). The third switching valve (153) switches between a first state in which the air in the first air supply path (102a) is supplied into the internal space (5) and a second state in which the air in the first air supply path (102a) is discharged to the external space (6). Specifically, the third switching valve (153) in the first state allows the first air supply path (102a) and the internal space (5) to communicate with each other, and isolates the first air supply path (102a) and the first exhaust path (103a) from each other. The third switching valve (153) in the second state isolates the first air supply path (102a) and the internal space (5) from each other, and allows the first air supply path (102a) and the first exhaust path (103a) to communicate with each other.

The fourth switching valve (154) is provided at the joint between the second air supply path (102b) and the second exhaust path (103b). In other words, the fourth switching valve (154) is provided in the second air supply path (102b), between the second outlet port (O2) of the gas separation module (120) and the outlet end of the second air supply path (102b). The fourth switching valve (154) switches between a first state in which the air in the second air supply path (102b) is supplied into the internal space (5) and a second state in which the air in the second air supply path (102b) is discharged to the external space (6). Specifically, the fourth switching valve (154) in the first state allows the second air supply path (102b) and the internal space (5) to communicate with each other, and isolates the second air supply path (102b) and the second exhaust path (103b) each other. The fourth switching valve (154) in the second state isolates the second air supply path (102b) and the internal space (5) from each other, and allows the second air supply path (102b) and the second exhaust path (103b) to communicate with each other.

The fifth switching valve (155) is provided at the joint between the air supply trunk path (102c) and the introduction path (107). In other words, the fifth switching valve (155) is provided upstream of the water supply path (108) in the air supply trunk path (102c). The fifth switching valve (155) switches between a first state in which the air in the air supply flow path (102) is supplied into the internal space (5) without passing through the water separation module (130) and a second state in which the air in the air supply flow path (102) is supplied into the internal space (5) via the water separation module (130). Specifically, the fifth switching valve (155) in the first state allows the air supply trunk path (102c) and the introduction path (107) to communicate with each other, and isolates the air supply trunk path (102c) and the internal space (5) from each other. The fifth switching valve (155) in the second state isolates the air supply trunk path (102c) and the introduction path (107) from each other, and allows the air supply trunk path (102c) and the internal space (5) to communicate with each other.

The flow path switching mechanism includes an air on-off valve (156) provided in the air flow path (A). The air on-off valve (156) is provided in the first sensor path (106a). The air on-off valve (156) is configured as an electromagnetic valve, for example, and opens and closes the sensor flow path (106).

### (4-8) Check Valve

The air flow path (A) is provided with a first check valve (157) and a second check valve (158).

The first check valve (157) is provided in the first air supply path (102a). Specifically, the first check valve (157) is provided in the first air supply path (102a), between the first outlet port (O1) of the gas separation module (120) and the joint with the bypass flow path (105). The first check valve (157) allows the air to flow from the first outlet port (O1) of the gas separation module (120) toward the outlet end of the first air supply path (102a) and prevents the air from flowing in the reverse direction.

The second check valve (158) is provided in the second air supply path (102b). Specifically, the second check valve (158) is provided in the second air supply path (102b), between the second outlet port (O2) of the gas separation module (120) and the joint with the second exhaust path (103b). The second check valve (158) allows the air to flow from the second outlet port (O2) of the gas separation module (120) toward the outlet end of the second air supply path (102b) and prevents the air from flowing in the reverse direction.

### (4-9) Pressure Sensor

The air flow path (A) is provided with a first pressure sensor (161), a second pressure sensor (162), and a third pressure sensor (163). These pressure sensors (161, 162, 163) detect the pressure of the air.

The first pressure sensor (161) is provided downstream of the water separation module (130) in the inflow path (101). Specifically, the first pressure sensor (161) is provided in the inflow trunk path (101c), between the third outlet port (O3) of the water separation module (130) and the second switching valve (152). The first pressure sensor (161) detects the pressure inside the water separation module (130). Specifically, the first pressure sensor (161) detects the internal pressure of the third exhaust chamber (136) or the water separation membranes (134).

The second pressure sensor (162) is provided downstream of the gas separation module (120) in the first air supply path (102a). Specifically, the second pressure sensor (162) is provided in the first air supply path (102a), between the first outlet port (O1) of the gas separation module (120) and the third switching valve (153). The second pressure sensor (162) detects the pressure inside the gas separation module (120). Specifically, the second pressure sensor (162) detects the pressure of the first exhaust chamber (126) or the internal pressure of the gas separation membranes (124).

The third pressure sensor (163) is provided downstream of the gas separation module (120) in the second air supply path (102b). Specifically, the third pressure sensor (163) is provided in the second air supply path (102b), between the second outlet port (O2) of the gas separation module (120) and the fourth switching valve (154). The third pressure sensor (163) detects the pressure in the second exhaust chamber (127) of the gas separation module (120).

### (4-10) Pressure Control Valve

The air flow path (A) is provided with a first pressure control valve (171) and a second pressure control valve (172). Each of these pressure control valves (171, 172) is an example of a pressure regulator that regulates the pressure of the air.

The first pressure control valve (171) is provided downstream of the water separation module (130) in the inflow path (101). Specifically, the first pressure control valve (171) is provided in the inflow trunk path (101c), between the first pressure sensor (161) and the second switching valve (152). The first pressure control valve (171) regulates the pressure inside the water separation module (130). Specifically, the first pressure control valve (171) regulates the pressure in the third exhaust chamber (136) of the water separation module (130) or the internal pressure of the water separation membranes (134). For example, the opening degree of the first pressure control valve (171) may be adjusted based on the pressure detected by the first pressure sensor (161). The first pressure control valve (171) regulates the pressure inside the water separation module (130) to enable appropriate dehumidification in the water separation module (130).

The second pressure control valve (172) is provided downstream of the gas separation module (120) in the first air supply path (102a). Specifically, the second pressure control valve (172) is provided in the first air supply path (102a), between the second pressure sensor (162) and the third switching valve (153). The second pressure control valve (172) regulates the pressure inside the gas separation module (120). Specifically, the second pressure control valve (172) regulates the pressure in the first exhaust chamber (126) of the gas separation module (120) or the internal pressure of the gas separation membranes (124). For example, the opening degree of the second pressure control valve (172) may be adjusted based on the pressure detected by the second pressure sensor (162). The second pressure control valve (172) regulates the pressure inside the gas separation module (120) to enable appropriate separation in the gas separation module (120).

### (4-11) Second Control Unit

As illustrated in FIGS. 4 and 5, the air control apparatus (100) includes a second control unit (190). The second control unit (190) is connected to the first control unit (90) via a communication line (W). The communication line (W) transfers signals and information between the first control unit (90) and the second control unit (190). The communication line (W) is wired, but wireless communication may also be applicable.

The second control unit (190) includes a second controller (191). The second controller (191) is an example of a controller of the present disclosure.

The second controller (191) includes a micro controller unit (MCU), an electric circuit, and an electronic circuit. The MCU includes a central processing unit (CPU), a memory, and a communication interface. The memory stores various programs to be executed by the CPU.

The second controller (191) receives signals detected by the first pressure sensor (161), the second pressure sensor (162), and the third pressure sensor (163). The second controller (191) controls the air pump (110), the flow path switching mechanism, and the pressure control valves (171, 172). Specifically, the second controller (191) controls operation of the air pump (110). The second controller (191) switches each of the switching valves (151, 152, 153, 154, 155) between the first state and the second state. The second controller (191) opens and closes the air on-off valve (156). The second controller (191) adjusts the opening degrees of the pressure control valves (171, 172).

### (4-12) Operation of Air Control Apparatus

The operation of the air control apparatus (100) will be described. The operation of the air control apparatus (100) includes first to fifth operations, which will be described below. In this example, the second controller (191) sets the fifth switching valve (155) in the first state in each of the first to fifth operations. Thus, in these operations, the water separation module (130) removes moisture in the air.

### (4-12-1) First Operation

The first operation is an operation in which both of the outside air and the inside air are the target air, and the first air is supplied to the internal space (5) and the second air is discharged to the external space (6). This first operation is performed to reduce the oxygen concentration of the air in the internal space (5).

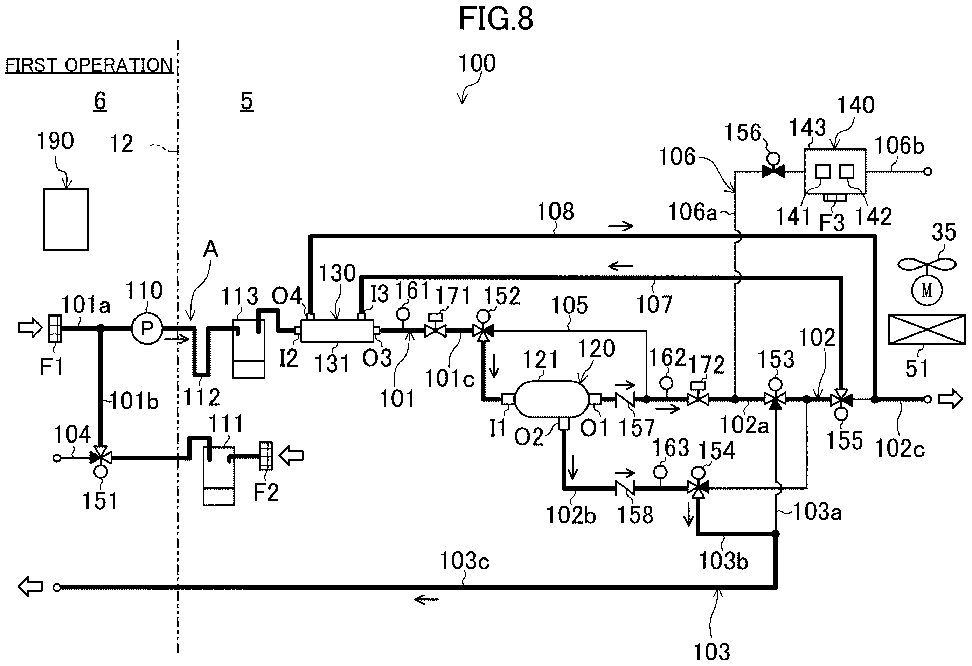

As illustrated in FIG. 8, in the first operation, the second controller (191) sets the first switching valve (151) in the first state, the second switching valve (152) in the first state, the third switching valve (153) in the first state, the fourth switching valve (154) in the second state, the fifth switching valve (155) in the first state, and the air on-off valve (156) in the closed state.

In the first operation, the inside air flowing through the second inflow path (101b) flows through the first water separator (111). The first water separator (111) separates water (liquid) in the inside air. The air that has passed through the first water separator (111) and the outside air flowing through the first inflow path (101a) flow into the inflow trunk path (101c) and are mixed together. The resultant mixture is then sucked into the air pump (110) as the target air. The air pump (110) compresses and discharges the sucked air. The air discharged from the air pump (110) is cooled by the condensation circuit (112), and then flows through the second water separator (113). The second water separator (113) separates water condensed while the target air passes through the condensation circuit (112), from the target air.

The air that has passed through the second water separator (113) is dehumidified by flowing through the water separation membranes (134) of the water separation module (130). The target air dehumidified in the water separation module (130) flows into the gas separation module (120). In the gas separation module (120), the target air is separated into the first air and the second air.

The first air having a lower oxygen concentration than the target air sequentially flows through the first air supply path (102a) and the introduction path (107), and then flows through the fourth exhaust chamber (137) of the water separation module (130). In the fourth exhaust chamber (137), the water molecules that have permeated through the water separation membranes (134) are imparted to the first air. The first air humidified in the water separation module (130) sequentially flows through the water supply path (108) and the air supply trunk path (102c), and is then supplied into the internal space (5).

The second air having a higher oxygen concentration than the target air sequentially flows through the second air supply path (102b), the second exhaust path (103b), and the exhaust trunk path (103c), and is discharged to the external space (6).

In the first operation, the flow rate of the outside air flowing through the first air filter (F1) into the first inflow path (101a) is higher than the flow rate of the second air to be discharged to the external space (6). As a result, an air pressure in the internal space (5) is higher than an air pressure outside the transport container (1) (i.e., the atmospheric pressure). Thus, the internal space (5) is maintained at a positive pressure.

### (4-12-2) Second Operation

The second operation is an operation in which the outside air is the target air, and the first air is supplied into the internal space (5) and the second air is discharged to the external space (6). The second operation is performed to reduce the oxygen concentration of the air in the internal space (5).

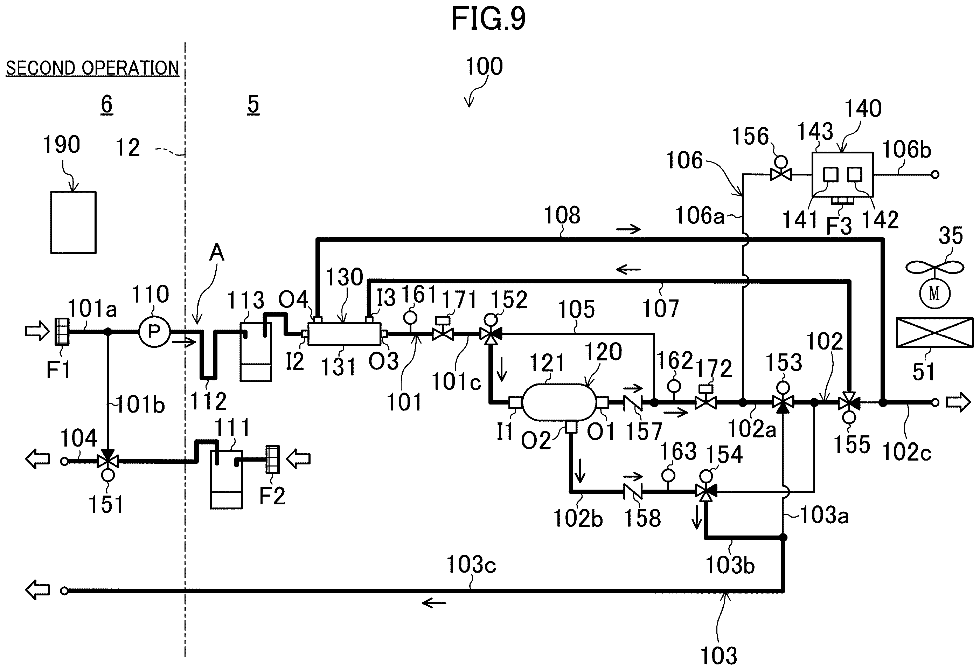

As illustrated in FIG. 9, in the second operation, the second controller (191) sets the first switching valve (151) in the second state, the second switching valve (152) in the first state, the third switching valve (153) in the first state, the fourth switching valve (154) in the second state, the fifth switching valve (155) in the first state, and the air on-off valve (156) in the closed state.

The outside air flowing through the first inflow path (101a) is compressed by the air pump (110), and then passes through the condensation circuit (112) and the second water separator (113). The air that has passed through the second water separator (113) is dehumidified by flowing through the water separation membranes (134) of the water separation module (130). The target air dehumidified in the water separation module (130) flows into the gas separation module (120). In the gas separation module (120), the target air is separated into the first air and the second air. After the first air having a lower oxygen concentration than the target air is humidified in the water separation module (130), the humidified first air sequentially flows through the water supply path (108) and the air supply trunk path (102c), and is then supplied into the internal space (5).

The second air having a higher oxygen concentration than the target air sequentially flows through the second air supply path (102b), the second exhaust path (103b), and the exhaust trunk path (103c), and is discharged to the external space (6).

In the second operation, the internal space (5) is maintained at a positive pressure. Thus, the air in the internal space (5) flows through the second inflow path (101b) and the internal exhaust path (104), and is discharged to the external space (6). As a result, the air in the internal space (5) is gradually replaced with the first air.

### (4-12-3) Third Operation

The third operation is an operation in which both of the outside air and the inside air are the target air, and the first air is discharged to the outside of the container and the second air is supplied into the inside of the container. The third operation is performed to increase the oxygen concentration of the air in the internal space (5).

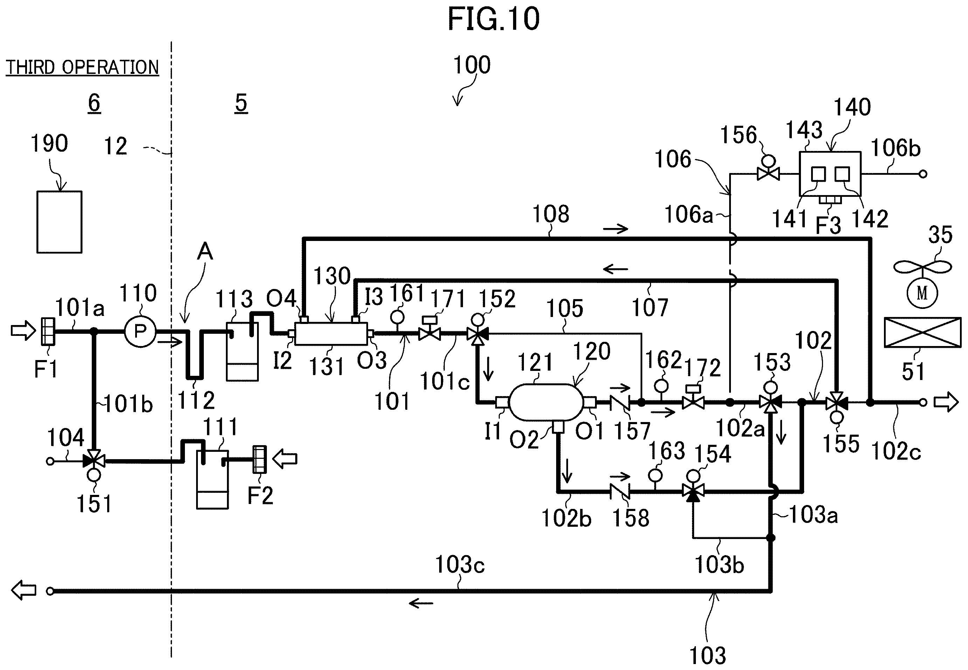

As illustrated in FIG. 10, in the third operation, the second controller (191) sets the first switching valve (151) in the first state, the second switching valve (152) in the first state, the third switching valve (153) in the second state, the fourth switching valve (154) in the first state, the fifth switching valve (155) in the first state, and the air on-off valve (156) in the closed state.

In the third operation, a mixture (target air) of the outside air flowing through the first inflow path (101a) and the inside air flowing through the second inflow path (101b) is compressed by the air pump (110), and then passes through the condensation circuit (112) and the second water separator (113). The air that has passed through the second water separator (113) is dehumidified by flowing through the water separation membranes (134) of the water separation module (130). The target air dehumidified in the water separation module (130) flows into the gas separation module (120). In the gas separation module (120), the target air is separated into the first air and the second air. The first air having a lower oxygen concentration than the target air sequentially flows through the first air supply path (102a), the first exhaust path (103a), and the exhaust trunk path (103c), and is discharged to the external space (6).

The second air having a higher oxygen concentration than the target air sequentially flows through the second air supply path (102b) and the introduction path (107), and then flows through the fourth exhaust chamber (137) of the water separation module (130). In the fourth exhaust chamber (137), the water molecules that have permeated through the water separation membranes (134) are imparted to the second air. The second air humidified in the water separation module (130) sequentially flows through the water supply path (108) and the air supply trunk path (102c), and is then supplied into the internal space (5).

In the third operation, the internal space (5) is maintained at a positive pressure.

### (4-12-4) Fourth Operation

The fourth operation is an operation in which the outside air is the target air, and the first air is discharged to the outside of the container and the second air is supplied to the inside of the container. The fourth operation is performed to increase the oxygen concentration of the air in the internal space (5).

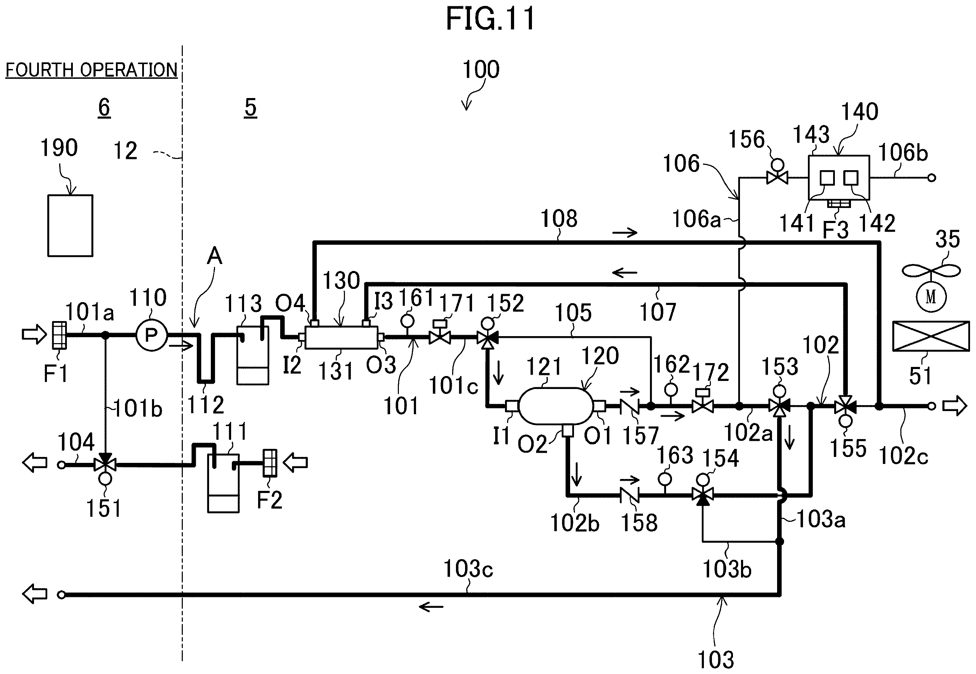

As illustrated in FIG. 11, in the fourth operation, the second controller (191) sets the first switching valve (151) in the second state, the second switching valve (152) in the first state, the third switching valve (153) in the second state, the fourth switching valve (154) in the first state, the fifth switching valve (155) in the first state, and the air on-off valve (156) in the closed state.

The outside air (target air) flowing through the first inflow path (101a) is compressed by the air pump (110), and then passes through the condensation circuit (112) and the second water separator (113). The air that has passed through the second water separator (113) is dehumidified by flowing through the water separation membranes (134) of the water separation module (130). The target air dehumidified in the water separation module (130) flows into the gas separation module (120). In the gas separation module (120), the target air is separated into the first air and the second air. After the second air having a higher oxygen concentration than the target air is humidified in the water separation module (130), the humidified second air sequentially flows through the water supply path (108) and the air supply trunk path (102c) and is then supplied into the internal space (5).

The first air having a lower oxygen concentration than the target air sequentially flows through the second air supply path (102b), the second exhaust path (103b), and the exhaust trunk path (103c) and is discharged to the external space (6).

In the fourth operation, the internal space (5) is maintained at a positive pressure. Thus, the air in the internal space (5) flows through the second inflow path (101b) and the internal exhaust path (104), and is discharged to the external space (6). As a result, the air in the internal space (5) is gradually replaced with the second air.

### (4-12-5) Fifth Operation

The fifth operation is an operation in which the outside air is supplied as it is to the inside of the container. The fifth operation is performed to increase the oxygen concentration of the air in the internal space (5).

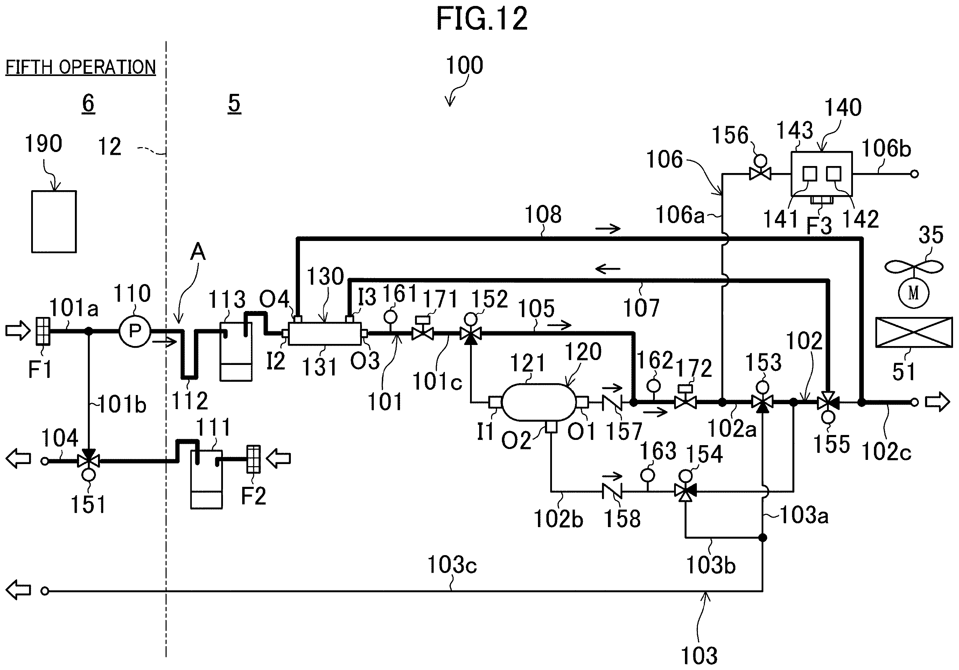

As illustrated in FIG. 12, in the fifth operation, the second controller (191) sets the first switching valve (151) in the second state, the second switching valve (152) in the second state, the third switching valve (153) in the first state, the fourth switching valve (154) in the second state; the fifth switching valve (155) in the first state, and the air on-off valve (156) in the closed state.

The outside air flowing through the first inflow path (101a) is compressed by the air pump (110), and then passes through the condensation circuit (112) and the second water separator (113). The air that has passed through the second water separator (113) is dehumidified by flowing through the water separation membranes (134) of the water separation module (130). The air dehumidified in the water separation module (130) flows through the bypass flow path (105) to bypass the gas separation module (120). The air that has flowed out of the bypass flow path (105) sequentially flows through the first air supply path (102a) and the introduction path (107), and then flows through the fourth exhaust chamber (137) of the water separation module (130). In the fourth exhaust chamber (137), the water molecules that have permeated through the water separation membranes (134) are imparted to the air. The air humidified in the water separation module (130) sequentially flows through the water supply path (108) and the air supply trunk path (102c), and is then supplied into the internal space (5).

In the fifth operation, the internal space (5) is maintained at a positive pressure. Thus, the air in the internal space (5) flows through the second inflow path (101b) and the internal exhaust path (104), and is discharged to the external space (6). As a result, the air in the internal space (5) is gradually replaced with the outside air.

### (5-1) Deterioration in Performance of Gas Separation Membranes

If the air control apparatus (100) is stopped for a long time, the performance of the gas separation membranes (124) of the gas separation module (120) deteriorates. The gas separation membranes (124) have a large number of pores for separating gas. If the gas separation module (120) is not used for a long period due to the stop of the air control apparatus (100), the gas separation membranes (124) contract, resulting in a reduction in the size of the pores. This lowers the permeabilities of oxygen and carbon dioxide through the gas separation membranes (124), causing a problem that the gas separation performance of the air control apparatus (100) deteriorates.

### (5-2) Determination of Start of Preliminary Operation

The air control apparatus (100) of this embodiment executes a first action to solve the above problem. Specifically, the second controller (191) executes the first action of reducing deterioration in the performance of the gas separation membranes (124) due to the stop of the air control apparatus (100) for a predetermined period. The first action includes a preliminary operation of supplying the target air to the gas separation membranes (124). The second controller (191) starts the preliminary operation when a predetermined period has elapsed since the stop of the air control apparatus (100).

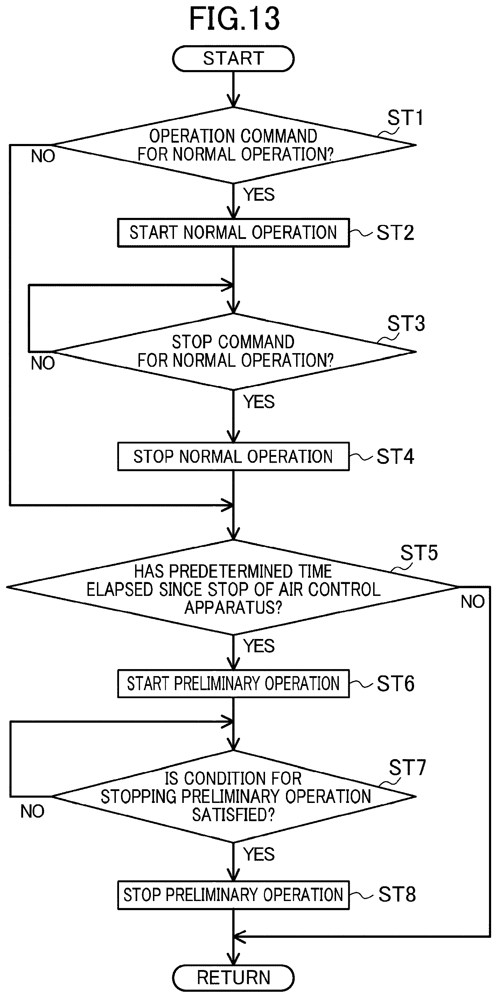

Control for the preliminary operation of this embodiment will be described in detail with reference to FIG. 13.

If, in step ST1, the second controller (191) receives an operation command for performing a normal operation, the second controller (191) controls the air control apparatus (100) to execute the normal operation in step ST2. Here, the normal operation is an operation in which the target air is separated by the gas separation module (120), and includes the first operation, the second operation, the third operation, and the fourth operation described above. The normal operation is intended to adjust the composition of the air in the internal space (5).

If, in step ST3, the second controller (191) receives a stop command for stopping the normal operation, the second controller (191) stops the air control apparatus (100) in step ST4.

If, in step ST5, a predetermined time T1 has elapsed since the stop of the operation of the air control apparatus (100), the second controller (191) executes the preliminary operation in step ST6. The operation as used herein includes the normal operation and the preliminary operation. The predetermined time T1 is set in consideration of the deterioration in the performance of the gas separation membranes (124) due to the stop of the air control apparatus (100) or non-use of the gas separation membranes (124). The predetermined time T1 is set to be several days to several tens of days, for example.

If a condition for stopping the preliminary operation is satisfied in step ST7, the second controller (191) stops the preliminary operation in step ST8. The condition for stopping the preliminary operation of this example is that a predetermined time T2 has elapsed since the start of the preliminary operation.

### (5-3) Preliminary Operation

The preliminary operation is an operation of supplying the target air to the gas separation membranes (124). The preliminary operation is an operation intended to reduce deterioration in the performance of the gas separation membranes (124) due to the stop of the air control apparatus (100) for a predetermined period. Thus, the air control apparatus (100) during the preliminary operation may perform operations similar to the first operation, the second operation, the third operation, and the fourth operation described above. The preliminary operation of this embodiment is different from the normal operation described above in that the preliminary operation is not executed based on an operation command associated with an operation of a person, such as a user.

If an action similar to, for example, the first operation (see FIG. 8) is performed in the preliminary operation, the target air flows through the gas separation module (120). In the gas separation module (120), the target air that has flowed into the first introduction chamber (125) flows through the gas separation membranes (124). The target air flowing through the interiors of the gas separation membranes (124) causes the gas separation membranes (124) to expand, resulting in an increase in the size of the pores. Accordingly, the performance of the gas separation membranes (124) separating oxygen and carbon dioxide recovers.

The air pump (110) constitutes a compression unit that compresses the air to be supplied to the gas separation membranes (124). Specifically, the air pump (110) compresses the target air such that the internal pressure of the gas separation membranes (124) during the preliminary operation is higher than or equal to the internal pressure P1 of the gas separation membranes (124) during the normal operation described above. The air pump (110) compresses the target air such that the internal pressure of the gas separation membranes (124) does not exceed the withstand pressure P2 of the gas separation membrane (124). The internal pressure of the gas separation membranes (124) can be adjusted by the second pressure control valve (172). Specifically, the second controller (191) controls the opening degree of the second pressure control valve (172) such that the pressure detected by the second pressure sensor (162) is higher than or equal to the pressure P1 and lower than the pressure P2. The internal pressure of the gas separation membranes (124) during the preliminary operation is maintained at, for example, 700 [kPa].

As described above, the target air to be supplied to the gas separation membranes (124) is compressed, which makes the gas separation membranes (124) expand easily and the size of the pores increase easily. As a result, the performance of the gas separation membranes (124) recovers more effectively.

The air control apparatus (100) includes, as dehumidifiers, first water separation membranes (134), second water separation membranes (134), and the water separation module (130). These dehumidifiers reduce the moisture in the air to be supplied to the gas separation membranes (124). Here, if the moisture in the air supplied to the gas separation membranes (124) adheres to the gas separation membranes (124), the moisture may close the pores, and the separation performance of the gas separation membranes (124) may deteriorate. To address this, the first water separation membranes (134), the second water separation membranes (134), and the water separation module (130) serving as the dehumidifiers dehumidify the air, thereby making it possible to reduce the deterioration in the performance of the gas separation membranes (124) due to the moisture adhering to the gas separation membranes (124). The dehumidifier(s) may be any one of the first water separator (111), the second water separator (113), or the water separation module (130) or any two of them, or may be a dehumidifier of any other type.

As described above, the second controller (191) continues the preliminary operation for the predetermined time T2. The predetermined time T2 is set to be 24 hours, for example. The size of the pores of the gas separation membranes (124) can be sufficiently increased by continuing the preliminary operation only for the predetermined time T2.

### (6) Features of Embodiment

(6-1)
   The air control apparatus (100) of the foregoing embodiment includes the second controller (191) configured to execute the first action of reducing deterioration in the performance of the gas separation membranes (124) due to the stop of the air control apparatus (100) for a predetermined period. It is thus possible to reduce the deterioration in the performance of the gas separation membranes (124) by the first action, also in the case in which the gas separation membranes (124) contract and deteriorate in performance.
(6-2)
   The first action includes the preliminary operation of supplying the target air to the gas separation membranes (124). In the preliminary operation, the target air supplied to the gas separation membranes (124) can expand the gas separation membranes (124), resulting in an increase in the size of the pores of the gas separation membranes (124). As a result, it is possible to recover the performance of the gas separation membranes (124) easily and quickly.
(6-3)
   The second controller (191) starts the preliminary operation when the predetermined time has elapsed since the stop of the air control apparatus (100). It is thus possible to recover the performance of the gas separation membranes (124) reliably in synchronization with the timing at which the performance of the gas separation membranes (124) deteriorates due to the stop of the air control apparatus (100).
(6-4)
   The air control apparatus (100) includes the air pump (110) configured to compress the air to be supplied to the gas separation membranes (124) in the preliminary operation. The gas separation membranes (124) therefore expand easily, which makes it possible for the gas separation membranes (124) to recover its performance quickly and reliably.
(6-5)
   The air control apparatus (100) includes the dehumidifiers (111, 113, 130) configured to reduce the moisture in the air to be supplied to the gas separation membranes (124) in the preliminary operation. It is thus possible to reduce the moisture closing the pores of the gas separation membranes (124), which makes it possible to reduce the deterioration in the performance of the gas separation membranes (124).

### (7) Variations of Embodiment

The foregoing embodiment may be modified as follows. In the following description, differences from the embodiment will be described in principle.

### (7-1) First Variation

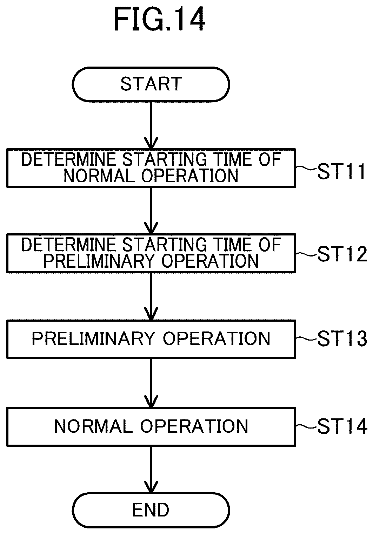

A second controller (191) of a first variation starts the preliminary operation a predetermined time prior to the start of the normal operation. This control will be described with reference to FIG. 14.

In step ST11, the second controller (191) determines the starting time of the normal operation. The second controller (191) may estimate the starting time of the normal operation. In this case, the second controller (191) estimates the starting time of the normal operation based on, for example, the transport route of the transport container (1). For example, a global positioning system (GPS) is installed on the transport container (1) or a ship that conveys the transport container (1), so that the second controller (191) can acquire the transport route of the transport container (1). The second controller (191) determines that the transport container (1) has arrived, for example, in port based on the GPS and estimates the starting time of the normal operation in correlation with this timing. The estimation is made because when the transport container (1) arrives in port, fresh products for the next shipping are carried into the container body (2), and it becomes necessary to cool the air in the internal space (5) and adjust the composition of the air.

The starting time of the normal operation may be an input value determined in advance by the user. In this case, the user determines the starting time of the normal operation through the operating section (92). The second controller (191) determines the time input through the operating section (92) to be the starting time of the normal operation.

In step ST12, the second controller (191) determines the starting time of the preliminary operation. The starting time of the preliminary operation is the time obtained by subtracting a period of execution of the preliminary operation (e.g., the time T2 described above) from the starting time of the normal operation.

In step ST13, the second controller (191) executes the preliminary operation of the air control apparatus (100) from the starting time determined in step ST12. As a result, the target air is supplied to the gas separation membranes (124) similarly to the foregoing embodiment. The performance of the gas separation membranes (124) can thus be recovered.

When the preliminary operation ends, the second controller (191) executes the normal operation in step ST14. Specifically, in the normal operation, the first operation, the second operation, the third operation, or the fourth operation described above is executed, for example. The preliminary operation is executed immediately before the normal operation, which means that the performance of the gas separation membranes (124) has been recovered. It is thus possible for the gas separation membranes (124) to exhibit the gas separation performance sufficiently in the normal operation.

In the first variation, the preliminary operation and the normal operation may be executed successively. In this case, it is preferable that the action in the preliminary operation is the same as the action in the normal operation. Specifically, assume that the second controller (191) causes execution of the first operation of the air control apparatus (100) in the normal operation. In this case, the second controller (191) causes execution of the first operation of the air control apparatus (100) in the preliminary operation, as well, to make the gas separation membranes (124) recover its performance. Strictly speaking, the second controller (191) executes the first operation as the normal operation successively after a lapse of the period of execution of the first operation as the preliminary operation. It is thus possible to start the normal operation with sufficient performance of the gas separation membranes (124) from the starting time of the normal operation, without stopping the air control apparatus (100).

### (7-2) Second Variation

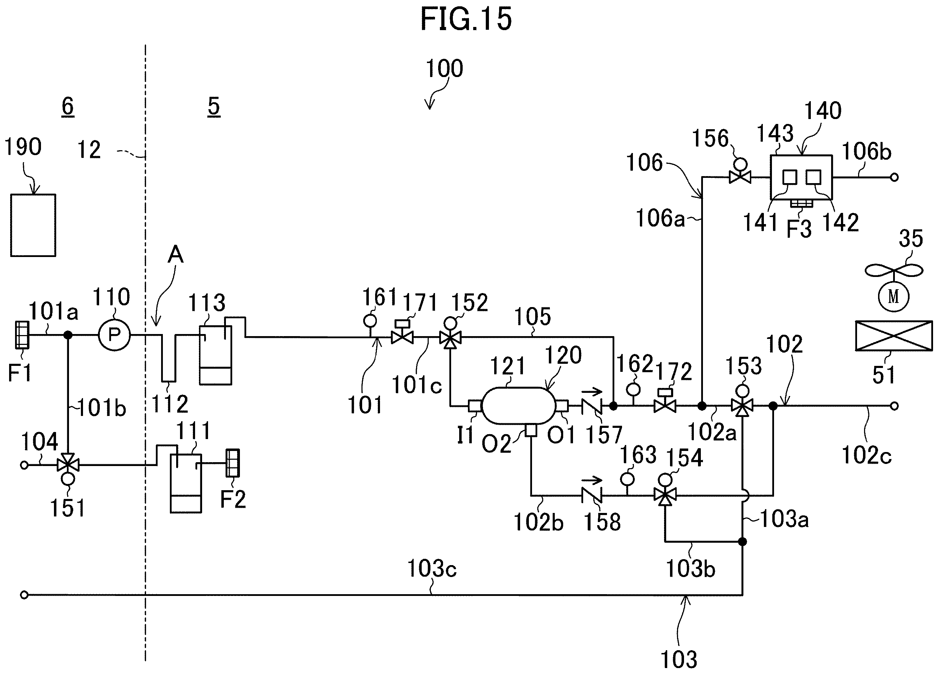

As illustrated in FIG. 15, an air control apparatus (100) of a second variation does not include the water separation module (130), the introduction path (107), the water supply path (108), and the fifth switching valve (155) according to the embodiment. The air control apparatus (100) of the second variation performs the first operation, the second operation, the third operation, the fourth operation, and the fifth operation, similarly to the embodiment. In the second variation, unlike the embodiment, the air in the air supply trunk path (102c) is sent directly to the internal space (5) without passing through the introduction path (107) and the water supply path (108).

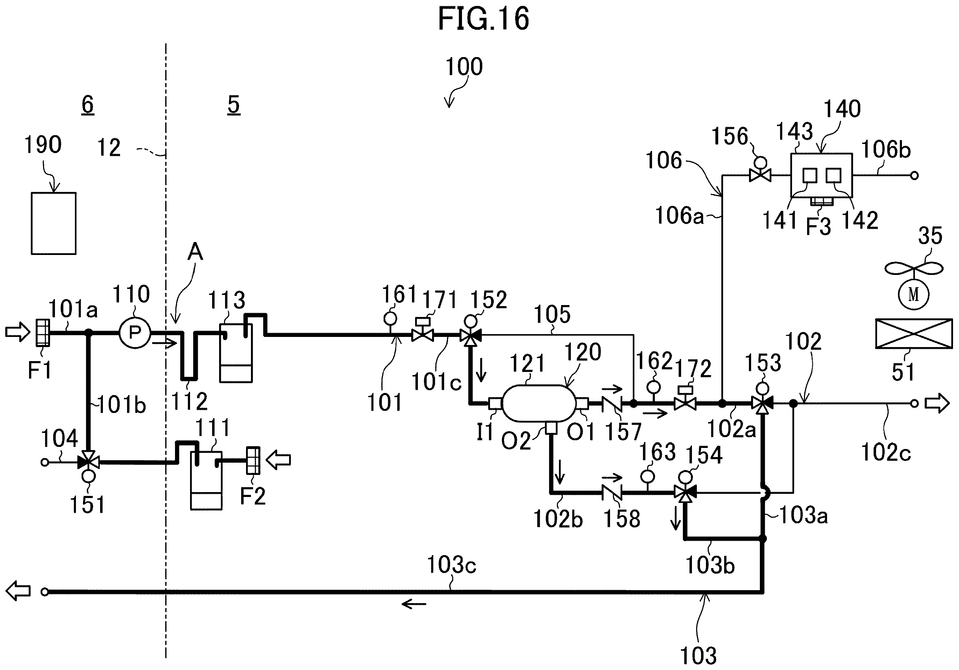

In the preliminary operation of the air control apparatus (100) of the second variation, as illustrated in FIG. 16, the first air and the second air separated from each other by the gas separation module (120) are discharged to the external space (6). In other words, the exhaust flow path (103) of the second variation discharges the first air and the second air separated from each other by the gas separation membranes (124) to the external space (6).

Specifically, in the preliminary operation, the second controller (191) sets the third switching valve (153) in the second state, and the fourth switching valve (154) in the second state. The second controller (191) sets the second switching valve (152) in the first state, and the air on-off valve (156) in the closed state, for example. For example, the second controller (191) sets the first switching valve (151) in the first state. The second controller (191) may set the first switching valve (151) in the second state.

In the preliminary operation, the air dehumidified by the first water separator (111) is supplied to the gas separation membranes (124) of the gas separation module (120). Accordingly, the performance of the gas separation membranes (124) recovers. The first air separated by the gas separation module (120) sequentially flows through the first air supply path (102a) and the first exhaust path (103a), and flows out to the exhaust trunk path (103c). The second air separated by the gas separation module (120) sequentially flows through the second air supply path (102b) and the second exhaust path (103b), and flows out to the exhaust trunk path (103c). The air merged in the exhaust trunk path (103c) is discharged to the external space (6). In the preliminary operation, if the second controller (191) sets the first switching valve (151) in the first state, the air dehumidified by the second water separator (113) is also supplied to the gas separation membranes (124) of the gas separation module (120). Accordingly, the performance of the gas separation membranes (124) recovers.

As described above, in the second variation, the first air and the second air separated from each other by the gas separation membranes (124) are discharged to the external space (6) in the preliminary operation. In other words, in the preliminary operation, the first air and the second air are not supplied into the internal space (5) that is the internal space of the container. It is thus possible to avoid a change in the composition of the air in the internal space (5) due to the execution of the preliminary operation.

In the air flow path (A) of the second variation, the second inflow path (101b) may be omitted, and the internal space (5) may be connected to the external space (6) via the internal exhaust path (104) without being connected to the inflow path (101). In this case, the internal exhaust path (104) is provided with an on-off valve. Whether to discharge the inside air of the internal space (5) to the external space (6) is switchable by the second controller (191) opening or closing the on-off valve. In the preliminary operation, if the second controller (191) sets the on-off valve in the closed state, the inside air is not discharged to the external space (6) through the internal exhaust path (104). It is thus possible to reduce the change in the composition of the air in the internal space (5) that is the internal space of the container. It is also possible to reduce a change in the pressure of the internal space (5).

### (7-3) Third Variation

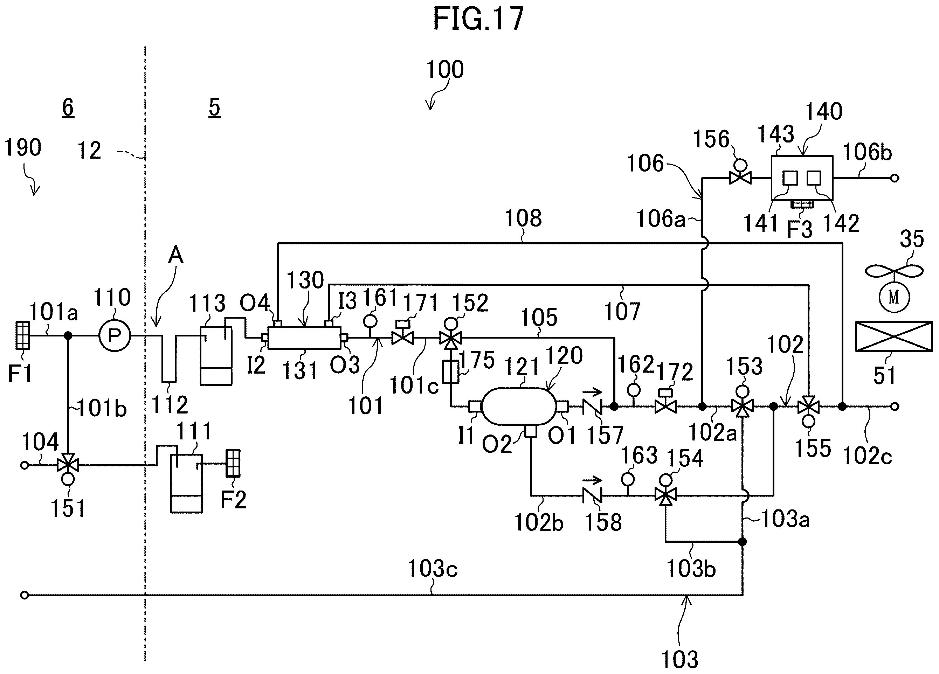

As illustrated in FIG. 17, an air control apparatus (100) of a third variation has a heating element (175) in an air flow path (A). The heating element (175) heats the air to be supplied to the gas separation membranes (124) in the preliminary operation. The heating element (175) of this example is configured as an electric heater. The heating element (175) is provided for the inflow trunk path (101c). Specifically, the heating element (175) is provided between the water separation module (130) and the gas separation module (120).

In the preliminary operation of the third variation, the target air heated to a predetermined temperature by the heating element (175) is supplied to the gas separation membranes (124). When the target air is heated, the components in the air can improve the recovery performance of the gas separation membranes (124). This improvement occurs conceivably because the diffusion coefficient of the gas in the gas separation membranes (124) increases when the temperature of the air increases, and because the relative humidity in the air decreases when the temperature of the air increases.

The heating element (175) may be a device provided for the refrigeration apparatus (10) and configured to heat the air by exhaust heat. Examples of this device include a compressor (31).

### (7-4) Fourth Variation

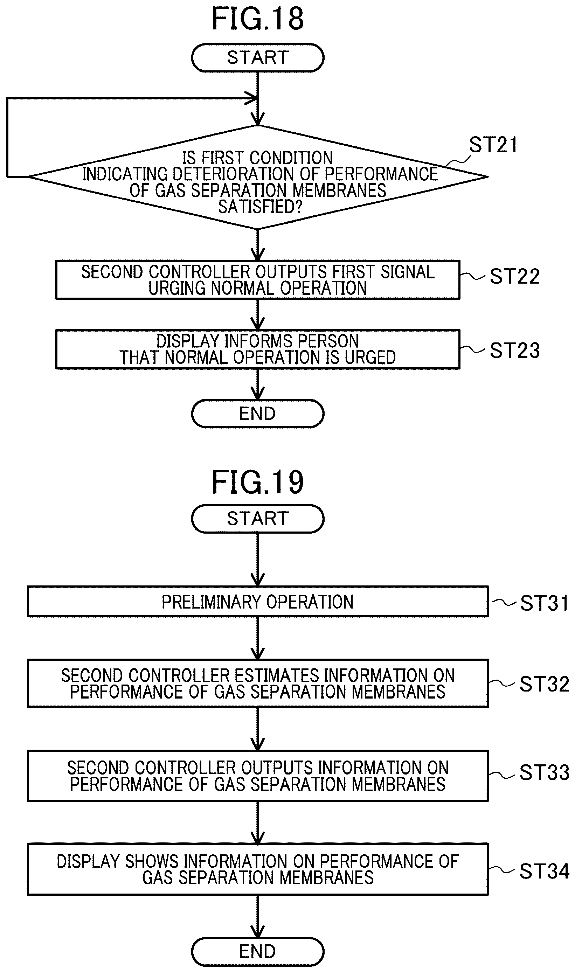

A second controller (191) of a fourth variation, which is not part of the present invention, executes an action for urging a person to operate the air control apparatus (100), as a first action. Control related to this action will be described in detail with reference to FIG. 18.

In step ST21, the second controller (191) determines whether a first condition indicating deterioration in the performance of the gas separation membranes (124) is satisfied. Here, the first condition includes a requirement that a predetermined time has elapsed since the stop of the air control apparatus (100), and a requirement that the gas separation membranes (124) have not been used for a predetermined time or longer. The first condition includes these requirements because if these requirements are met, the pores of the gas separation membranes (124) become smaller in size.

If the first condition is satisfied in step ST21, the second controller (191) outputs a first signal for urging a person to operate the air control apparatus (100) in step ST22. The first signal output from the second controller (191) is input to the first controller (93) of the first control unit (90) via the communication line (W).

The first controller (93) that has received the first signal controls the display (91) to urge the person to operate the air control apparatus (100). Strictly speaking, the first controller (93) that has received the first signal controls the display (91) to urge the person to execute the normal operation. The display (91) is an example of a first annunciator that informs the person that the person is urged to operate the air control apparatus (100). In step ST23, the display (91) urges the normal operation of the air control apparatus (100) to the person, using a letter, a figure, a symbol, or a sign, for example. The person who has checked the display (91) operates the operating section (92) to execute the normal operation of the air control apparatus (100).

In the normal operation of the fourth variation, the first operation, the second operation, the third operation, or the fourth operation is executed, for example. In the normal operation of the fourth variation, the fifth operation may be executed. Alternatively, in the operation of the fourth variation, an operation similar to the preliminary operation described in the second variation may be executed. Alternatively, in the operation of the fourth variation, an operation similar to the preliminary operation described in the third variation may be executed.

The first annunciator may be a light emitter, such as a light emitting diode (LED), configured to urge the normal operation of the air control apparatus (100) with light. The first annunciator may be a sound generator configured to urge the normal operation of the air control apparatus (100) with sound, such as voice.

The first annunciator, such as the display (91), may be provided for the second control unit (190). In this case, if the first condition is satisfied in step ST21, the display (91) of the air control apparatus (100) urges the normal operation of the air control apparatus (100) to the person.

### (7-5) Fifth Variation

A second controller (191) of a fifth variation outputs information on the performance of the gas separation membranes (124). Control related to this action will be described in detail with reference to FIG. 19. The control according to FIG. 19 is given to the air control apparatus (100) of the embodiment described above. In other words, the air control apparatus (100) of the fifth variation performs an action (second action) for outputting the information on the performance of the gas separation membranes (124) in addition to the first action.

In step ST31, the second controller (191) executes the preliminary operation of the air control apparatus (100). In step ST32, the second controller (191) estimates the information on the performance of the gas separation membranes (124). Specifically, the second controller (191) estimates the time required for the gas separation membranes (124) to recover the performance.

The second controller (191) stores data indicating the relationship between the change in the speed of the internal pressure of the gas separation membranes (124) and the elapsed time of the preliminary operation. The diameter of the pores of the gas separation membranes (124) is small immediately after the start of the preliminary operation, whereas the diameter of the pores gradually increases with the execution of the preliminary operation. The pores become large enough as the preliminary operation progresses, and the speed of change in the diameter of the pores is reduced. Thus, the decrement in the internal pressure of the gas separation membranes (124) is relatively large immediately after the start of the preliminary operation, and thereafter gradually becomes small. That is, the speed of decrease in the internal pressure of the gas separation membranes (124) is relatively high immediately after the start of the preliminary operation, and thereafter the speed of decrease is gradually reduced. This means that if the speed of decrease in the internal pressure of the gas separation membranes (124) at a certain point of time is known, it is possible to estimate how much time needs to elapse from that point of time so that the performance of the gas separation membranes (124) be recovered.

Specifically, in step ST32, the second controller (191) obtains the speed of decrease in the pressure value detected by the second pressure sensor (162) at a predetermined point of time after the start of the preliminary operation. The second controller (191) estimates a period of time required for the gas separation membranes (124) to recover the performance and the time at which the performance of the gas separation membranes (124) recovers, based on the obtained speed of decrease and the data described above. In step ST32, in principle, the second controller (191) does not adjust the opening degree of the second pressure control valve (172) in obtaining the speed of decrease in the internal pressure of the gas separation membranes (124).

In step S33, the second controller (191) outputs the information on the estimated period of time and the estimated time as the information on the performance of the gas separation membranes (124). The second controller (191) outputs the information to the first controller (93) of the first control unit (90). The first controller (93) that has received the information controls the display (91) to inform the person of the period of time and the time. The display (91) is an example of a second annunciator that informs the person of the information on the performance of the gas separation membranes (124). In step ST34, the display (91) displays the period of time required for the gas separation membranes (124) to recover the performance and the time at which the performance of the gas separation membranes (124) recovers, using a letter, a figure, a symbol, or a sign, for example. In this manner, the person can know the period of time required for the gas separation membranes (124) to recover the performance and the time at which the performance of the gas separation membranes (124) recovers, via the display (91). The reliability of the air control apparatus (100) can thus be ensured.

The second annunciator may be a light emitter that informs the person of the information on the performance of the gas separation membranes (124) with light. The second annunciator may be a sound generator that informs the person of the information on the performance of the gas separation membranes (124) with sound, such as voice.

The second annunciator, such as the display (91), may be provided for the second control unit (190). In this case, in step ST34, the display (91) of the air control apparatus (100) informs the person of the information on the performance of the gas separation membranes (124).

In this example, the information on the performance of the gas separation membranes (124) is the period of time required for the gas separation membranes (124) to recover the performance and the time at which the performance of the gas separation membranes (124) recovers. However, the information may be the performance itself of the gas separation membranes (124), or may be the degree of deterioration in the performance of the gas separation membranes (124).

### (7-6) Sixth Variation

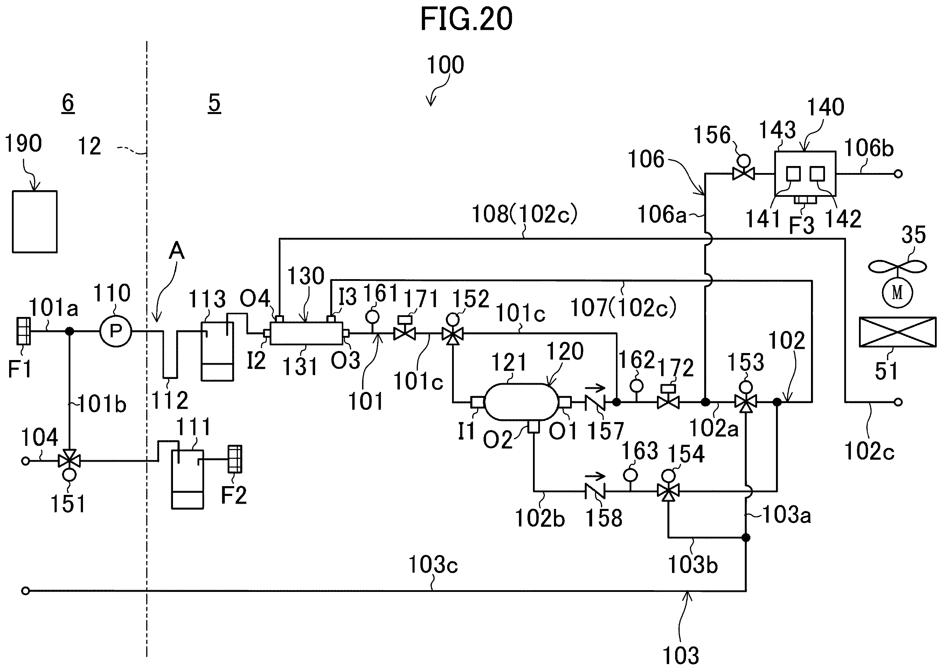

The fifth switching valve (155) according to the embodiment is omitted from an air control apparatus (100) of a sixth variation illustrated in FIG. 20. In the sixth variation, the air to be supplied into the inside of the container always flows through the introduction path (107) and the water supply path (108), and is transferred to the internal space (5). In other words, in the sixth variation, the introduction path (107) and the water supply path (108) form part of the air supply trunk path (102c).

### (8) Reference Example

An air control apparatus (100) of a reference example does not perform the first action according to each of the embodiment and the first to fourth variations. In other words, the air control apparatus (100) of the reference example does not perform the action of reducing deterioration in the performance of the gas separation membranes (124) due to the stop of the air control apparatus (100) for a predetermined period. The air control apparatus (100) of the reference example performs the second action according to the fifth variation. Accordingly, a person can be informed of the information on the performance of the gas separation membranes (124). The reliability of the air control apparatus (100) can thus be ensured.

### (9) Other Embodiments

The compression unit may be other than the air pump (110), and may be a compressor that compresses air or a fan that transfers air.

The fifth switching valve (155) may be omitted from the air control apparatus (100) of the embodiment.

The air control apparatus (100), the transport refrigeration apparatus (10), or the transport container may have a rechargeable auxiliary power source, such as a battery. The auxiliary power source is configured to be able to supply power to the air control apparatus. Power can be supplied from the auxiliary power source to the air control apparatus (100) even when the power source of the air control apparatus (100) is turned off and the air control apparatus (100) is out of operation. Thus, the air control apparatus (100) can execute the preliminary operation with reliability even when the air control apparatus (100) is out of operation.

The transport container (1) may be used for land transportation. In this case, the transport container (1) is conveyed by a land transporter, such as a vehicle. Specifically, the transport container (1) may be mounted on a trailer.

The air control apparatus (100) may be used to adjust the composition of air in a stationary warehouse. For example, the air control apparatus (100) may be installed in a warehouse for keeping fresh products, such as fruits, vegetables, and flowers and ornamental plants. In this case, an internal space (5) as an internal space for storing objects to be kept is formed in the warehouse.

The ordinal numbers such as "first," "second," "third," ... , described above are used to distinguish the terms to which these expressions are given, and do not limit the number and order of the terms.

### INDUSTRIAL APPLICABILITY

As can be seen from the foregoing description, the present disclosure is useful for an air control apparatus, a refrigeration apparatus, and a transport container.

### DESCRIPTION OF REFERENCE CHARACTERS

- 1: Transport Container
- 2: Container Body
- 5: Internal Space
- 6: External Space
- 10: Refrigeration Apparatus
- 30: Refrigerant Circuit
- 100: Air Control Apparatus
- 103: Exhaust Flow Path
- 110: Air Pump (Compression Unit)
- 111: First Water Separator (Dehumidifier)
- 113: Second Water Separator (Dehumidifier)
- 124: Gas Separation Membrane
- 130: Water Separation Module (Dehumidifier)
- 175: Heating Element
- 191: Controller

## Claims

1. An air control apparatus for a transport container (1) or a stationary warehouse and configured to adjust a composition of inside air of an internal space (5) of the transport container (1) or the stationary warehouse, the air control apparatus comprising:
a gas separation membrane (124) to which target air is supplied; and
a controller (191) configured to execute a first action of reducing deterioration in performance of the gas separation membrane (124) due to stop of the air control apparatus for a predetermined period
the first action including a preliminary operation of supplying the target air to the gas separation membrane (124),
**characterized by** the controller (191) being configured to
start the preliminary operation when a predetermined time has elapsed since the stop of the air control apparatus or start the preliminary operation a predetermined time prior to start of a normal operation of the air control apparatus,
the air control apparatus further comprising:
an exhaust flow path (103) through which first air and second air separated from each other by the gas separation membrane (124) are discharged to an external space (6) in the preliminary operation, and
a heating element (175) configured to heat air to be supplied to the gas separation membrane (124) in the preliminary operation, or
a compression unit (110) configured to compress air to be supplied to the gas separation membrane (124) in the preliminary operation, or
a dehumidifier (111, 113, 130) configured to reduce moisture in air to be supplied to the gas separation membrane (124) in the preliminary operation.

2. The air control apparatus of claim 1, wherein
the first action includes an action for urging a person to operate the air control apparatus.

3. The air control apparatus of any one of claims 1 to 2, wherein
the controller (191) outputs information on the performance of the gas separation membrane (124).

4. A refrigeration apparatus comprising:
the air control apparatus (100) of any one of claims 1 to 3; and
a refrigerant circuit (30) configured to adjust a temperature inside the internal space (5).

5. Atransport container comprising:
the refrigeration apparatus (10) of claim 4; and
a container body (2) in which the refrigeration apparatus (10) is installed.

## Patentansprüche

1. Luftsteuerungsvorrichtung für einen Transportbehälter (1) oder ein stationäres Lager und ausgebildet, um eine Zusammensetzung von Innenluft eines Innenraums (5) des Transportbehälters (1) oder des stationären Lagers anzupassen, wobei die Luftsteuerungsvorrichtung umfasst:
eine Gastrennmembran (124), der Zielluft zugeführt wird; und
eine Steuereinheit (191), die ausgebildet ist, um eine erste Aktion zum Verringern einer Verschlechterung der Leistungsfähigkeit der Gastrennmembran (124) aufgrund eines Stillstands der Luftsteuerungsvorrichtung über eine vorbestimmte Zeit auszuführen,
wobei die erste Aktion einen Vorbereitungsbetrieb einschließt, in dem der Gastrennmembran (124) die Zielluft zugeführt wird,
**dadurch gekennzeichnet, dass** die Steuereinheit (191) ausgebildet ist, um den Vorbereitungsbetrieb zu starten, wenn seit dem Stillstand der Luftsteuerungsvorrichtung eine vorbestimmte Zeit verstrichen ist, oder den Vorbereitungsbetrieb eine vorbestimmte Zeit vor Beginn eines Normalbetriebs der Luftsteuerungsvorrichtung zu starten,
wobei die Luftsteuerungsvorrichtung weiter umfasst:
einen Abluft-Durchflussweg (103), durch den erste Luft und zweite Luft, die durch die Gastrennmembran (124) voneinander getrennt wurden, im Vorbereitungsbetrieb in einen Außenraum (6) abgeführt werden, und
ein Heizelement (175), das ausgebildet ist, um Luft, die der Gastrennmembran (124) im Vorbereitungsbetrieb zugeführt werden soll, zu erwärmen, oder
eine Kompressionseinheit (110), die ausgebildet ist, um Luft, die der Gastrennmembran (124) im Vorbereitungsbetrieb zugeführt werden soll, zu komprimieren, oder
einen Entfeuchter (111, 113, 130), der ausgebildet ist, um die Feuchtigkeit in Luft, die der Gastrennmembran (124) im Vorbereitungsbetrieb zugeführt werden soll, zu verringern.

2. Luftsteuerungsvorrichtung nach Anspruch 1, wobei die erste Aktion eine Aktion einschließt, um eine Person zum Betreiben der Luftsteuerungsvorrichtung zu mahnen.

3. Luftsteuerungsvorrichtung nach einem der Ansprüche 1 bis 2, wobei die Steuereinheit (191) Informationen zur Leistungsfähigkeit der Gastrennmembran (124) ausgibt.

4. Kühlvorrichtung, umfassend:
die Luftsteuerungsvorrichtung (100) nach einem der Ansprüche 1 bis 3; und
einen Kältemittelkreislauf (30), der ausgebildet ist, um eine Temperatur im Innenraum (5) anzupassen.

5. Transportbehälter, umfassend:
die Kühlvorrichtung (10) nach Anspruch 4; und
einen Behälterkörper (2), in dem die Kühlvorrichtung (10) installiert ist.

## Revendications

1. Appareil de commande d'air pour un conteneur de transport (1) ou un entrepôt fixe et configuré pour régler la composition de l'air intérieur de l'espace interne (5) du conteneur de transport (1) ou de l'entrepôt fixe, l'appareil de commande d'air comprenant :
une membrane de séparation de gaz (124) à laquelle est apporté de l'air cible ; et
un dispositif de commande (191) configuré pour mettre en œuvre une première action de réduction d'une détérioration des performances de la membrane de séparation de gaz (124) due à un arrêt de l'appareil de commande d'air pendant une période prédéterminée
la première action incluant un fonctionnement préliminaire consistant à apporter l'air cible à la membrane de séparation de gaz (124),
**caractérisé en ce que** le dispositif de commande (191) est configuré pour démarrer le fonctionnement préliminaire lorsqu'une durée prédétermine s'est écoulée depuis l'arrêt de l'appareil de commande d'air ou démarrer le fonctionnement préliminaire un moment prédéterminé avant le démarrage d'un fonctionnement normal de l'appareil de commande d'air,
l'appareil de commande d'air comprenant en outre :
un canal d'écoulement d'évacuation (103) par lequel un premier air et un deuxième air séparés l'un de l'autre par la membrane de séparation de gaz (124) sont évacués vers un espace externe (6) lors du fonctionnement préliminaire, et
un élément chauffant (175) configuré pour chauffer l'air à apporter à la membrane de séparation de gaz (124) lors du fonctionnement préliminaire, ou
une unité de compression (110) configurée pour comprimer l'air à apporter à la membrane de séparation de gaz (124) lors du fonctionnement préliminaire, ou
un déshumidificateur (111, 113, 130) configuré pour réduire l'humidité dans l'air à apporter à la membrane de séparation de gaz (124) lors du fonctionnement préliminaire.

2. Appareil de commande d'air selon la revendication 1, dans lequel la première action inclut une action destinée à inciter une personne à faire fonctionner l'appareil de commande d'air.

3. Appareil de commande d'air selon l'une quelconque des revendications 1 à 2, dans lequel le dispositif de commande (191) délivre en sortie des informations sur les performances de la membrane de séparation de gaz (124).

4. Appareil de réfrigération comprenant :
l'appareil de commande d'air (100) selon l'une quelconque des revendications 1 à 3 ; et
un circuit (30) de fluide frigorigène configuré pour régler une température à l'intérieur de l'espace interne (5).

5. Conteneur de transport comprenant :
l'appareil de réfrigération (10) selon la revendication 4 ; et
un corps (2) de conteneur dans lequel est installé l'appareil de réfrigération (10).
